# EUROPEAN PATENT APPLICATION

(11) **EP 3 276 952 A1**
(43) Date of publication of application: **31.01.2018**
(21) Application number: 16771746.1
(22) Date of filing: 25.03.2016
(51) Int. Cl.: H04N 5/93, G06F 3/0484, G11B 27/34, H04N 5/76, H04N 21/431, H04N 21/482

(54) **VIDEO PLAYBACK DEVICE AND PROGRAM INFORMATION DISPLAY METHOD**

(30) Priority: 27.03.2015 JP 2015067429
(71) Applicant: Panasonic Intellectual Property Management Co., Ltd., Osaka-shi, Osaka 540-6207 (JP)
(72) Inventor: FUKUDA, Hideki, Osaka-shi, Osaka 540-6207 (JP); MUIKAICHI, Masahiro, Osaka-shi, Osaka 540-6207 (JP); KANDO, Osamu, Osaka-shi, Osaka 540-6207 (JP); IWASAKI, Shiro, Osaka-shi, Osaka 540-6207 (JP)
(74) Representative: Vigand, Philippe
(86) International application number: PCT/JP2016/001731
(87) International publication number: WO 2016/157858

(57) **Abstract**

There is provided a recording and playback apparatus that allows a user to select and play back a desired program from among recorded programs, with a relatively small amount of time and trouble. A user interface creator included in a recording and playback apparatus creates a plurality of selection screens for selecting, by a user, a desired program from among a plurality of recorded programs. The selection screens arrange and display a plurality of pieces of program information classified by different classification methods each other. When a predetermined user command is received during playback of a program, the user interface creator creates a user interface image that is for selecting program information by the user and that is displayed so as to be partially superimposed on video of the program being played back. The user interface image displays pieces of program information classified using a classification method that conforms to a classification method for the selection screen used when the program being played back is selected.

## Description

### TECHNICAL FIELD

The present disclosure relates to a recording and playback apparatus that records and plays back broadcast programs, and a method for displaying program information.

### BACKGROUND ART

A recording and playback apparatus that records and plays back broadcast programs and includes a storage apparatus with increased capacity can record a significant number of programs. For example, a recording and playback apparatus disclosed in PTL 1 includes a plurality of tuners and can simultaneously receive a plurality of channels, and is capable of continuously recording programs of one or more channels. Such a function is hereinafter referred to as "channel recording".

### Citation List

PTL
PTL 1: Japanese Patent No. 4,843,703

### SUMMARY

The larger the number of programs recorded in a recording and playback apparatus, the greater the time and trouble taken for a user to select a desired program from among the recorded programs.

The present disclosure provides a recording and playback apparatus and a method for displaying program information that are capable of selecting and playing back a desired program from among recorded programs, with a relatively small amount of time and trouble.

A recording and playback apparatus of the present disclosure includes a user input unit, a receiver, a recorder, a player, a user interface creator, and a controller. The user input unit accepts a user command. The receiver receives a plurality of programs and pieces of program information of the programs. The recorder records the plurality of received programs and the pieces of received program information in a recording medium. The player plays back the recorded programs. The user interface creator creates a plurality of selection screens for selecting, by a user, a desired program from among the plurality of recorded programs. The controller controls the player and the user interface creator. Each of the selection screens created by the user interface creator arranges and displays the plurality of pieces of program information classified by different classification methods each other. When one of the pieces of program information is selected on one of the selection screens, the player plays back the program related to the selected program information. When the user input unit receives a predetermined user command during the playback of the program by the player, the controller controls the user interface creator such that a user interface image is created, the user interface image being for selecting any of the pieces of program information by the user and being displayed so as to be partially superimposed on video of the program being played back. The user interface image displays the pieces of program information classified using a classification method, the classification method conforming to a classification method for the selection screen used when the program being played back is selected.

A recording and playback apparatus of the present disclosure includes a user input unit, a receiver, a recorder, a player, a user interface creator, and a controller. The user input unit accepts a user command. The receiver receives a plurality of programs and pieces of program information of the programs. The recorder records the plurality of received programs and the pieces of received program information in a recording medium. The player plays back the recorded programs. The user interface creator creates a plurality of selection screens for selecting, by a user, a desired program from among the plurality of recorded programs. The controller controls the player and the user interface creator. Each of the selection screens created by the user interface creator arranges and displays the plurality of pieces of program information classified by different classification methods each other. When one of the pieces of program information is selected on one of the selection screens, the player plays back the program related to the selected program information. When the user input unit receives a predetermined user command during the playback of the program by the player, the controller controls the user interface creator such that a user interface image is created, the user interface image being for selecting any of the pieces of program information by the user and being displayed so as to be partially superimposed on video of the program being played back. The user interface image displays a region representing a classification type of a classification method for the selection screen used when the program being played back is selected.

A method for displaying program information of the present disclosure is a method for displaying program information in a recording and playback apparatus, and includes accepting a user command; receiving a plurality of programs and pieces of program information of the programs; recording the plurality of received programs and the pieces of received program information in a recording medium; creating one of a plurality of selection screens, the selection screens being for selecting, by a user, a desired program from among the plurality of recorded programs, and arranging and displaying the plurality of pieces of program information classified by different classification methods each other; playing back, when one of the pieces of program information is selected on one of the selection screens, the program related to the selected program information; and creating a user interface image when a predetermined user command is received during the playback of the program, the user interface image being for selecting any of the pieces of program information by the user and being displayed so as to be partially superimposed on video of the program being played back. The user interface image displays the pieces of program information classified using a classification method, the classification method conforming to a classification method for the selection screen used when the program being played back is selected.

A method for displaying program information of the present disclosure is a method for displaying program information in a recording and playback apparatus, and includes accepting a user command; receiving a plurality of programs and pieces of program information of the programs; recording the plurality of received programs and the pieces of received program information in a recording medium; creating one of a plurality of selection screens, the selection screens being for selecting, by a user, a desired program from among the plurality of recorded programs, and arranging and displaying the plurality of pieces of program information classified by different classification methods each other; playing back, when one of the pieces of program information is selected on one of the selection screens, the program related to the selected program information; and creating a user interface image when a predetermined user command is received during the playback of the program, the user interface image being for selecting any of the pieces of program information by the user and being displayed so as to be partially superimposed on video of the program being played back. The user interface image displays a region representing a classification type of a classification method for the selection screen used when the program being played back is selected.

The recording and playback apparatuses and methods for displaying program information of the present disclosure allow a user to select and play back a desired program from among recorded programs, with a relatively small amount of time and trouble.

### BRIEF DESCRIPTION OF DRAWINGS

FIG. 1 is a block diagram schematically showing an exemplary configuration of a television system including a recording and playback apparatus of a first exemplary embodiment.
FIG. 2 is a top view of a remote controller of the first exemplary embodiment.
FIG. 3 is a side view of the remote controller of the first exemplary embodiment.
FIG. 4 is a diagram schematically showing an example of a screen of a first program selection menu for a channel recording list that is displayed on a display when a channel recording list key of the remote controller is pressed down in a state in which the recording and playback apparatus of the first exemplary embodiment is not playing back a recorded program.
FIG. 5 is a diagram schematically showing an example of a screen that is displayed on the display when the recording and playback apparatus of the first exemplary embodiment is playing back a program selected in the first program selection menu for a channel recording list shown in FIG. 4.
FIG. 6 is a diagram schematically showing an example of a screen that is displayed on the display when a playback menu key of the remote controller is pressed down in a state in which the recording and playback apparatus of the first exemplary embodiment is playing back a program selected in the first program selection menu for a channel recording list shown in FIG. 4.
FIG. 7 is a diagram schematically showing an example of a screen that is displayed on the display when an up key of the remote controller is pressed down after the screen shown in FIG. 6 is displayed in the recording and playback apparatus of the first exemplary embodiment.
FIG. 8 is a diagram schematically showing an example of a screen that is displayed on the display when a left key of the remote controller is pressed down after the screen shown in FIG. 6 is displayed in the recording and playback apparatus of the first exemplary embodiment.
FIG. 9 is a diagram schematically showing an example of a screen of a first program selection menu for a normal recording list that is displayed on the display when a normal recording list key of the remote controller is pressed down in a state in which the recording and playback apparatus of the first exemplary embodiment is not playing back a recorded program.
FIG. 10 is a diagram schematically showing an example of a screen that is displayed on the display when the recording and playback apparatus of the first exemplary embodiment is playing back a program selected in the first program selection menu for a normal recording list shown in FIG. 9.
FIG. 11 is a diagram schematically showing an example of a screen that is displayed on the display when the playback menu key of the remote controller is pressed down in a state in which the recording and playback apparatus of the first exemplary embodiment is playing back a program selected in the first program selection menu for a normal recording list shown in FIG. 9.
FIG. 12 is a diagram schematically showing an example of a screen that is displayed on the display when the up key of the remote controller is pressed down after the screen shown in FIG. 11 is displayed in the recording and playback apparatus of the first exemplary embodiment.
FIG. 13 is a diagram schematically showing an example of a screen that is displayed on the display when the left key of the remote controller is pressed down after the screen shown in FIG. 11 is displayed in the recording and playback apparatus of the first exemplary embodiment.
FIG. 14 is a diagram schematically showing an example of a screen of a first page of a first program selection menu for a category list that is displayed on the display when a category list key of the remote controller is pressed down in a state in which the recording and playback apparatus of the first exemplary embodiment is not playing back a recorded program.
FIG. 15 is a diagram schematically showing an example of a screen of a second page of the first program selection menu for a category list that is displayed on the display when the category list key of the remote controller is pressed down in a state in which the recording and playback apparatus of the first exemplary embodiment is not playing back a recorded program.
FIG. 16 is a diagram schematically showing an example of a screen of a third page of the first program selection menu for a category list that is displayed on the display when the category list key of the remote controller is pressed down in a state in which the recording and playback apparatus of the first exemplary embodiment is not playing back a recorded program.
FIG. 17 is a diagram schematically showing an example of a screen that is displayed on the display when the recording and playback apparatus of the first exemplary embodiment is playing back a program selected in the first program selection menu for a category list shown in FIGS. 14 to 16.
FIG. 18 is a diagram schematically showing an example of a screen that is displayed on the display when the playback menu key of the remote controller is pressed down in a state in which the recording and playback apparatus of the first exemplary embodiment is playing back a program selected in the first program selection menu for a category list shown in FIGS. 14 to 16.
FIG. 19 is a diagram schematically showing an example of a screen that is displayed on the display when the up key of the remote controller is pressed down after the screen shown in FIG. 18 is displayed in the recording and playback apparatus of the first exemplary embodiment.
FIG. 20 is a diagram schematically showing an example of a screen that is displayed on the display when the left key of the remote controller is pressed down after the screen shown in FIG. 18 is displayed in the recording and playback apparatus of the first exemplary embodiment.
FIG. 21 is a diagram schematically showing an example of a screen that is displayed on the display when one of the up/down/left/right keys of the remote controller is pressed down in a state in which the recording and playback apparatus of the first exemplary embodiment is playing back a program selected in the first program selection menu for a channel recording list shown in FIG. 4.
FIG. 22 is a diagram schematically showing an example of a screen that is displayed on the display when one of the up/down/left/right keys of the remote controller is pressed down in a state in which the recording and playback apparatus of the first exemplary embodiment is playing back a program selected in the first program selection menu for a category list shown in FIGS. 14 to 16.
FIG. 23 is a flowchart showing an example of a program playback process performed by a control circuit included in the recording and playback apparatus of the first exemplary embodiment.
FIG. 24 is a flowchart showing an example of a subroutine of a playback start process performed by the control circuit included in the recording and playback apparatus of the first exemplary embodiment.
FIG. 25 is a flowchart showing an example of a subroutine of a program reselection process performed by the control circuit included in the recording and playback apparatus of the first exemplary embodiment.
FIG. 26 is a flowchart showing an example of a subroutine of a top menu reselection process performed by the control circuit included in the recording and playback apparatus of the first exemplary embodiment.
FIG. 27 is a flowchart showing an example of a subroutine of a left menu reselection process performed by the control circuit included in the recording and playback apparatus of the first exemplary embodiment.
FIG. 28 is a flowchart showing an example of a subroutine of a program zapping process performed by the control circuit included in the recording and playback apparatus of the first exemplary embodiment.
FIG. 29 is a flowchart showing an example of a subroutine of a playback end process performed by the control circuit included in the recording and playback apparatus of the first exemplary embodiment.

### DESCRIPTION OF EMBODIMENTS

Exemplary embodiments will be described in detail below with reference to the drawings as appropriate. Note, however, that a more-than-necessary detailed description may be omitted. For example, a detailed description of already well-known matters and an duplicating description of substantially the same configurations may be omitted to avoid the following description from becoming unnecessarily redundant and facilitate the understanding of one skilled in the art.

Note that the accompanying drawings and the following description are provided for one skilled in the art to thoroughly understand the present disclosure and thus are not intended to limit the subject matters described in the claims.

Note also that the drawings are schematic diagrams and are not always depicted strictly. In addition, in the drawings, substantially the same components are denoted by the same reference marks and description thereof may be omitted or simplified.

### (FIRST EXEMPLARY EMBODIMENT)

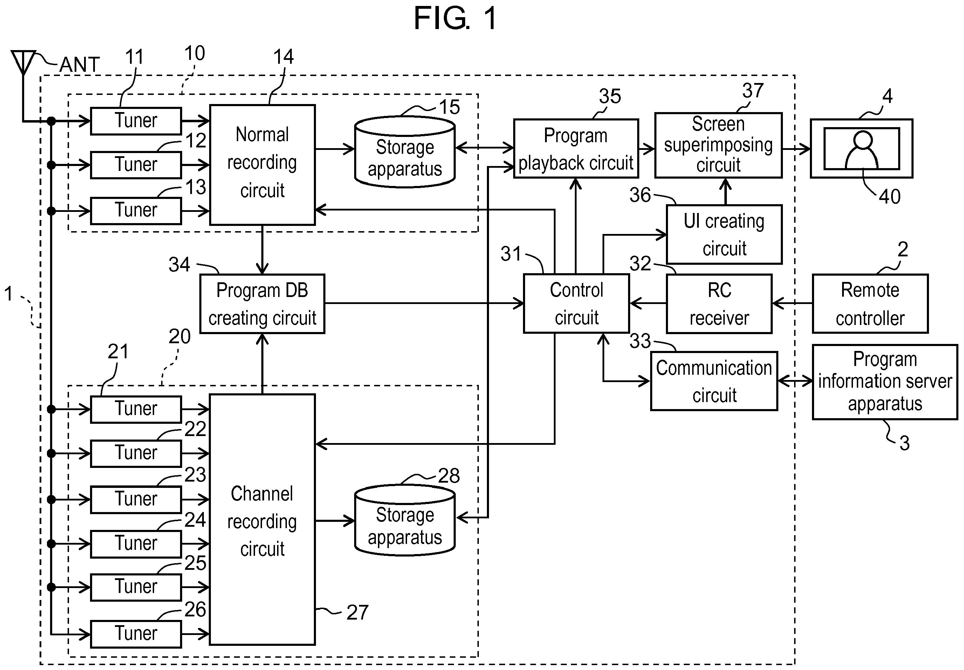

With reference to FIGS. 1 to 29, a recording and playback apparatus of a first exemplary embodiment will be described below. Note that, in the following, switches provided to remote controller 2 and operable by a user are referred to as "keys". Note also that regions or areas displayed on screen 40 of display 4 and operable by the user are referred to as "buttons".

### [1-1. Configuration]

FIG. 1 is a block diagram schematically showing an exemplary configuration of a television system including recording and playback apparatus 1 of the first exemplary embodiment.

The television system includes antenna ANT, recording and playback apparatus 1, remote controller 2, program information server apparatus 3, and display 4.

Recording and playback apparatus 1 is connected to antenna ANT. Recording and playback apparatus 1 can record a plurality of programs which are broadcast from broadcast stations through broadcast waves, and play back the recorded programs. Recording and playback apparatus 1 has a normal recording function and a channel recording function. The normal recording function is a function of recording a program that is being broadcast and specified by a user or a program that is programmed to record by the user. The channel recording function is a function of continuously recording programs of one or more channels. Therefore, recording and playback apparatus 1 having the channel recording function can continuously record substantially all programs that are broadcast on channels which are recording targets.

Remote controller 2 can communicate with recording and playback apparatus 1 wirelessly (e.g., Bluetooth (registered trademark) or infrared rays). Remote controller 2 can obtain an instruction (user command) which is input by the user, and wirelessly transmit the user command to recording and playback apparatus 1.

Program information server apparatus 3 can communicate with recording and playback apparatus 1 through a network such as the Internet, and provide recording and playback apparatus 1 with program information which is information related to a program being played back on recording and playback apparatus 1.

Display 4 is, for example, a television receiver. Display 4 is connected to recording and playback apparatus 1 through an interface such as HDMI (registered trademark) (High Definition Multimedia Interface), and can display a program played back by recording and playback apparatus 1, on screen 40.

Recording and playback apparatus 1 includes normal recorder 10, channel recorder 20, control circuit 31, RC (remote control) receiver 32, communication circuit 33, program DB (database) creating circuit 34, program playback circuit 35, UI (user interface) creating circuit 36, and screen superimposing circuit 37.

Normal recorder 10 includes tuner 11, tuner 12, tuner 13, normal recording circuit 14, and storage apparatus 15.

Channel recorder 20 includes tuner 21, tuner 22, tuner 23, tuner 24, tuner 25, tuner 26, channel recording circuit 27, and storage apparatus 28.

Normal recorder 10 can record a program that is being broadcast and specified by the user or a program that is programmed to record by the user.

Channel recorder 20 can continuously record programs of one or more channels. Therefore, channel recorder 20 can continuously record substantially all programs that are broadcast on channels which are recording targets.

Tuners 11 to 13 and tuners 21 to 26 are examples of at least one receiver. Tuners 11 to 13 and tuners 21 to 26 are connected to antenna ANT, and can receive a plurality of programs that are broadcast from broadcast stations by terrestrial broadcasting or satellite broadcasting (BS (Broadcasting Satellite) broadcasting, CS (Communications Satellite) broadcasting, or the like), and program information of the programs.

Normal recording circuit 14 records the plurality of programs and the program information of the programs which are received by tuners 11 to 13, in storage apparatus 15. Channel recording circuit 27 records the plurality of programs and the program information of the programs which are received by tuners 21 to 26, in storage apparatus 28. Storage apparatus 15 and storage apparatus 28 are examples of a storage unit and may be composed of one or a plurality of hard disk drives, etc.

Channel recorder 20 may, for example, go inactive for a period of a predetermined length of a day for maintenance of recording and playback apparatus 1.

RC receiver 32 is an example of a user input unit. RC receiver 32 can obtain user commands (control signals) from remote controller 2 by wirelessly communicating with remote controller 2.

Communication circuit 33 can obtain program information related to a program being played back on recording and playback apparatus 1 from program information server apparatus 3 by communicating with program information server apparatus 3. The program information related to the program being played back on recording and playback apparatus 1 includes, for example, a list of scenes of the program being played back, programs similar to the program being played back, and program ranking. Communication circuit 33 may obtain other information such as news by communicating with program information server apparatus 3.

Program DB creating circuit 34 can create a program database including attribute information, such as title names, recording time, and genres, and information about recording positions, which are the program information of the programs recorded in storage apparatuses 15, 28.

Program playback circuit 35 is an example of a player. Program playback circuit 35 can play back one of the plurality of programs recorded in storage apparatuses 15, 28.

UI creating circuit 36 is an example of a user interface creator. UI creating circuit 36 can create a plurality of user interface images, based on program database information. The user interface images are images to be displayed on screen 40 of display 4 so that the user can select one of the plurality of programs recorded in storage apparatuses 15, 28.

Screen superimposing circuit 37 is an example of a screen superimposer. Screen superimposing circuit 37 can generate an output video signal, based on a video signal of a program played back and a user interface image.

Control circuit 31 is an example of a controller. Control circuit 31 can control normal recording circuit 14, channel recording circuit 27, program playback circuit 35, and UI creating circuit 36, based on user commands.

Video created using the output video signal which is generated by screen superimposing circuit 37 is displayed on screen 40 of display 4.

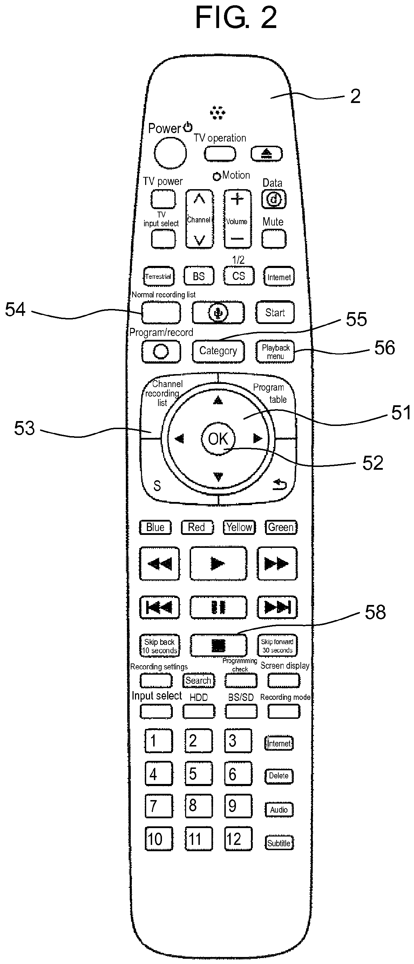

FIG. 2 is a top view of remote controller 2 of the first exemplary embodiment.

FIG. 2 shows an example of a plurality of keys included in remote controller 2. In the present exemplary embodiment, of the plurality of keys included in remote controller 2, cursor key 51, OK key 52, channel recording list key 53, normal recording list key 54, category list key 55, and playback menu key 56 are mainly used. Cursor key 51 includes an up key, a down key, a left key, and a right key.

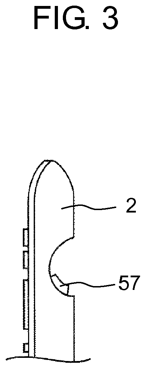

FIG. 3 is a side view of remote controller 2 of the first exemplary embodiment.

As shown in FIG. 3, a back of remote controller 2 (a back side of a side where the plurality of keys are provided) is provided with an indentation in which a user's finger can be inserted. Then, motion key 57 is disposed in the indentation so that the user can easily shake remote controller 2 up and down or left and right with motion key 57 kept pressed.

Remote controller 2 may include a gyro sensor that operates when motion key 57 is pressed. Remote controller 2 may detect, by the gyro sensor, an amount of movement when remote controller 2 is shaken up and down or left and right, and transmit the detected amount of movement to recording and playback apparatus 1. UI creating circuit 36 in recording and playback apparatus 1 may move a cursor on screen 40, according to the amount of movement of remote controller 2 which is detected by remote controller 2 and transmitted from remote controller 2. This function is hereinafter referred to as a "motion function".

### [1-2. Operation]

In order to enable the user to select a desirable program from among recorded programs, recording and playback apparatus 1 presents a plurality of program selection menus to the user. In the present exemplary embodiment, recording and playback apparatus 1 mainly presents following three program selection menus to the user.

### (1) Channel recording list

A channel recording list is a program selection menu for enabling the user to select a desired program from a plurality of programs recorded by channel recorder 20. The channel recording list has a program table format where a plurality of pieces of program information are arranged two-dimensionally by channel and time.

### (2) Normal recording list

A normal recording list is a program selection menu for enabling the user to select a desired program from a plurality of programs recorded by normal recorder 10. The normal recording list has a format where a plurality of pieces of program information are arranged chronologically.

### (3) Category list

A category list is a program selection menu for enabling the user to select a desired program from the plurality of programs recorded by channel recorder 20. The category list has a format where a plurality of pieces of program information are classified and arranged by category.

In the program selection menus (i.e., the channel recording list, the normal recording list, and the category list), pieces of program information of a plurality of recorded programs are classified and arranged by different classification methods.

In general, when a number of menus presented to the user increases, a number of transitions performed between the menus increases, complicating user operations. Therefore, a recording and playback apparatus is desired that allows the user to select and play back his/her desired program from among recorded programs, with a relatively small amount of time and trouble by suppressing complication of user operations.

In the present exemplary embodiment, UI creating circuit 36 creates UI images of program selection menus with a plurality of pairs where pieces of program information of a plurality of programs recorded in storage apparatuses 15, 28 are classified and arranged by a plurality of classification methods. When UI creating circuit 36 creates, for example, a program selection menu for the channel recording list, UI creating circuit 36 creates a UI image where a channel and a date (or time) are paired up.

Each program selection menu has a first program selection menu and a second program selection menu. The first program selection menu and the second program selection menu include a plurality of arrays of a plurality of pieces of program information classified by a same classification method. Namely, the channel recording list has a first program selection menu and a second program selection menu that are displayed on display 4 in a channel recording list format. The normal recording list has a first program selection menu and a second program selection menu that are displayed on display 4 in a normal recording list format. The category list has a first program selection menu and a second program selection menu that are displayed on display 4 in a category list format.

Note that the first program selection menu is displayed on display 4 when a recorded program is not being played back, and the second program selection menu is displayed on display 4 when a recorded program is being played back, such that the second program selection menu is partially superimposed on video of the program being played back.

### [1-2-1. Playback of a program using a channel recording list]

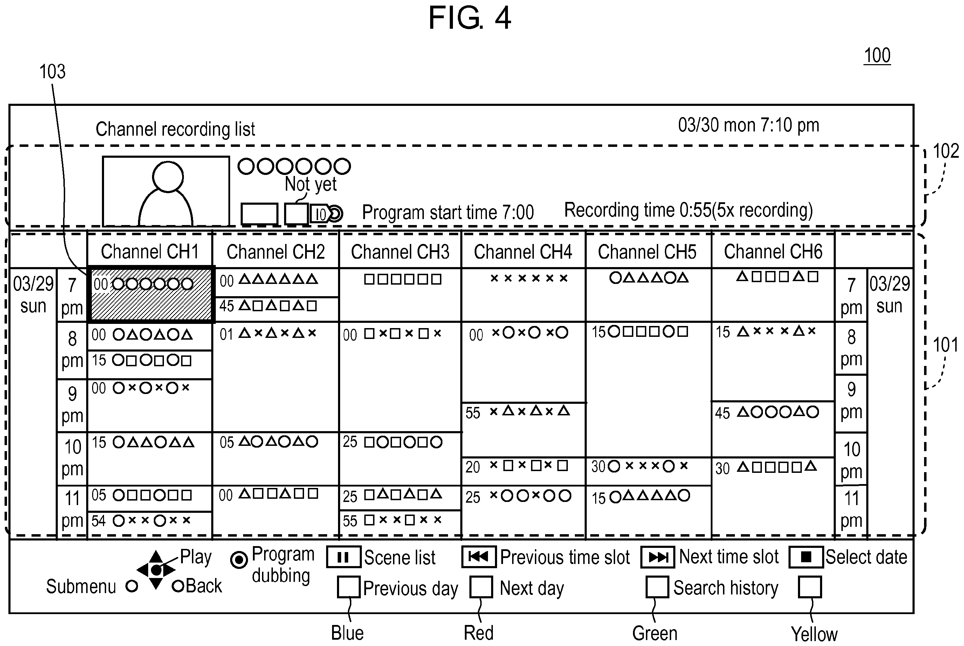

Fig. 4 is a diagram schematically showing an example of screen 100 of a first program selection menu for a channel recording list that is displayed on display 4 (see FIG. 1) when channel recording list key 53 of remote controller 2 is pressed down in a state in which recording and playback apparatus 1 of the first exemplary embodiment is not playing back a recorded program.

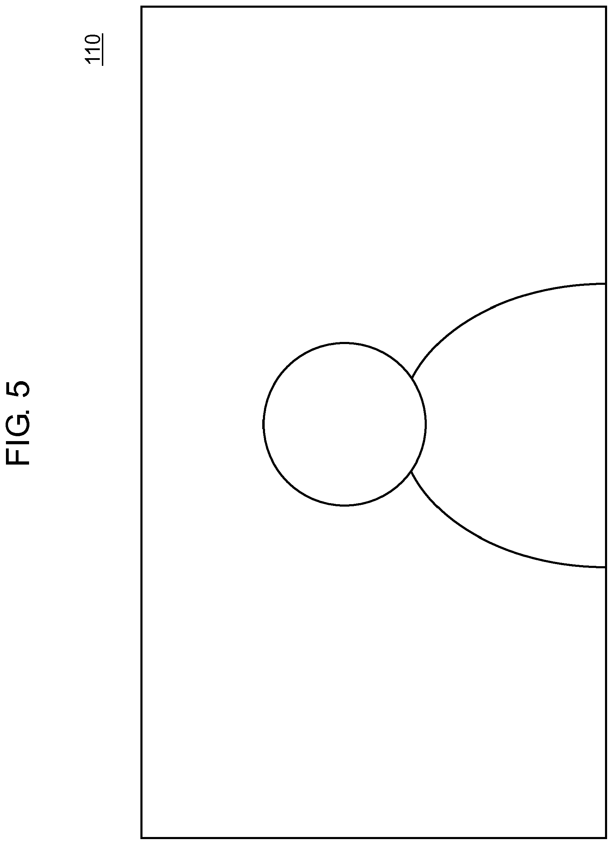

FIG. 5 is a diagram schematically showing an example of screen 110 that is displayed on display 4 (see FIG. 1) when recording and playback apparatus 1 of the first exemplary embodiment is playing back a program selected in the first program selection menu for a channel recording list shown in FIG. 4.

In recording and playback apparatus 1, when channel recording list key 53 of remote controller 2 is pressed down in a state in which a recorded program is not being played back, a first program selection menu for a channel recording list is displayed on display 4 by control circuit 31. Screen 100 of FIG. 4 shows an example of the first program selection menu for a channel recording list. The first program selection menu for a channel recording list includes program table area 101 and description area 102.

As shown in FIG. 4, program table area 101 has a program table format where pieces of program information of a plurality of programs recorded by channel recorder 20 are arranged two-dimensionally with a horizontal axis being a channel and a vertical axis being time. Therefore, in the first program selection menu for a channel recording list, the plurality of programs recorded by channel recorder 20 are classified into a plurality of arrays corresponding to each of a plurality of channels having broadcast the programs. Then, in a display field of each channel, programs of the channel are arranged chronologically.

The user can select one piece of program information among the plurality of pieces of program information displayed in program table area 101 by moving cursor 103 within program table area 101, using cursor key 51 of remote controller 2. Description area 102 displays description of a program corresponding to the program information selected by cursor 103. When OK key 52 of remote controller 2 is pressed down, recording and playback apparatus 1 starts playback of the program corresponding to the program information selected by cursor 103. By this, for example, as exemplified in FIG. 5, video of the program selected by the user is displayed on display 4.

When a user command for instructing to call a second program selection menu is input in a state in which a recorded program is being played back, a second program selection menu is displayed on display 4 by control circuit 31 so as to be partially superimposed on video of the program being played back. The second program selection menu is a program selection menu that uses a classification method conforming to a classification method for a program selection menu used when the program being played back is selected. For example, when a program selected in a first program selection menu for a channel recording list is being played back, if a user command for instructing to call a second program selection menu is input, then a second program selection menu conforming to a channel recording list format is displayed on display 4 so as to be partially superimposed on video of the program being played back. Likewise, when a program selected in a first program selection menu for a normal recording list is being played back, a second program selection menu conforming to a normal recording list format is displayed on display 4, and when a program selected in a first program selection menu for a category list is being played back, a second program selection menu conforming to a category list format is displayed on display 4. Note that, in the present exemplary embodiment, a user command for instructing to call a second program selection menu is input to remote controller 2 by pressing down playback menu key 56 of remote controller 2, and transmitted to recording and playback apparatus 1 from remote controller 2.

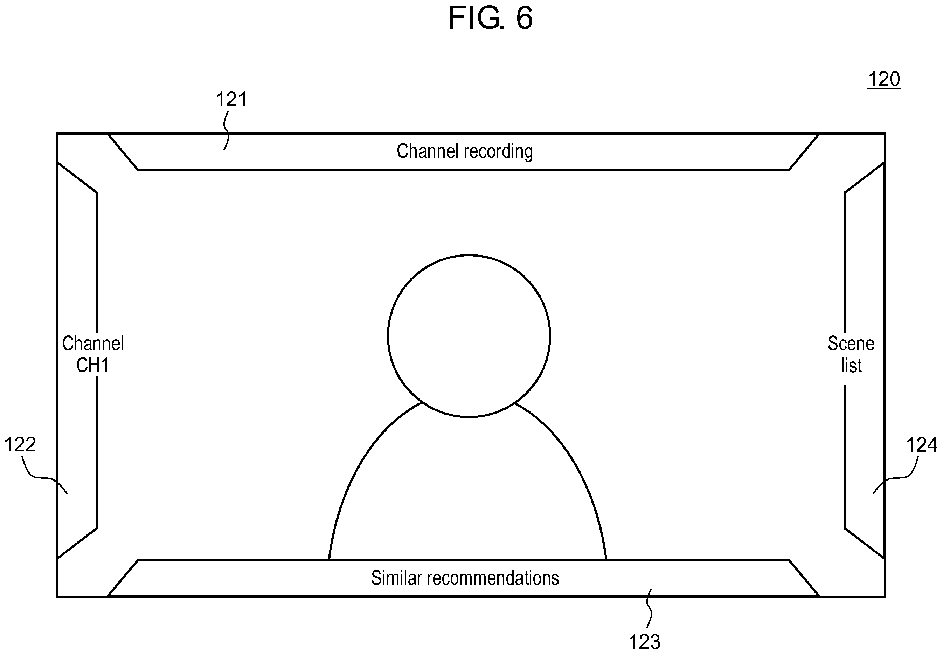

FIG. 6 is a diagram schematically showing an example of screen 120 that is displayed on display 4 (see FIG. 1) when playback menu key 56 of remote controller 2 is pressed down in a state in which recording and playback apparatus 1 of the first exemplary embodiment is playing back a program selected in the first program selection menu for a channel recording list shown in FIG. 4.

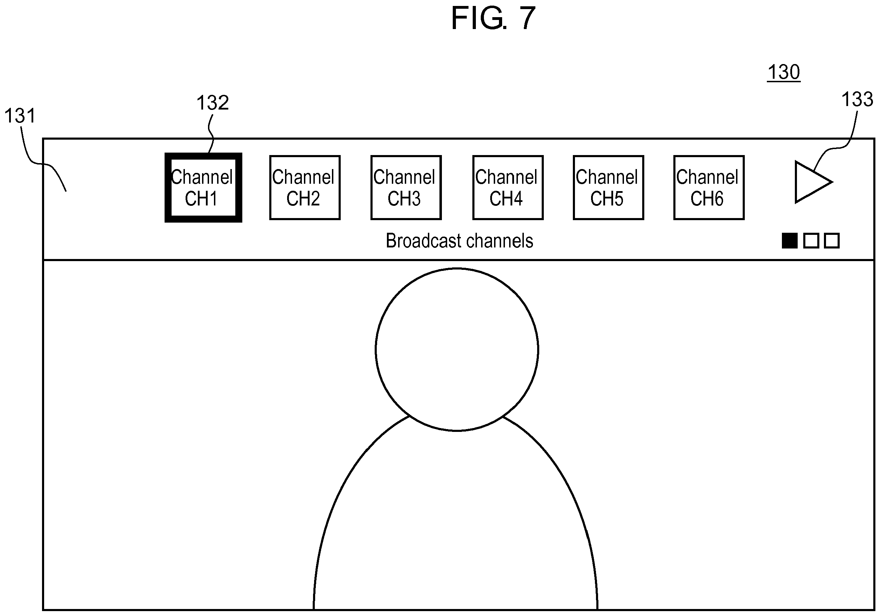

FIG. 7 is a diagram schematically showing an example of screen 130 that is displayed on display 4 (see FIG. 1) when the up key of remote controller 2 is pressed down after screen 120 shown in FIG. 6 is displayed in recording and playback apparatus 1 of the first exemplary embodiment.

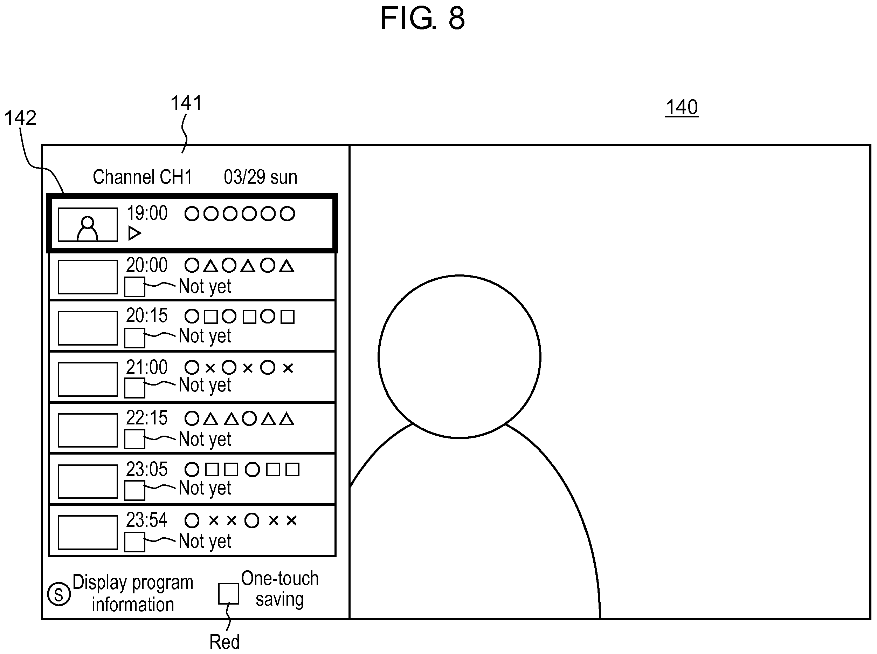

FIG. 8 is a diagram schematically showing an example of screen 140 that is displayed on display 4 (see FIG. 1) when the left key of remote controller 2 is pressed down after screen 120 shown in FIG. 6 is displayed in recording and playback apparatus 1 of the first exemplary embodiment.

Screen 120 of FIG. 6, screen 130 of FIG. 7, and screen 140 of FIG. 8 show examples of the second program selection menu for a channel recording list.

The second program selection menu includes a plurality of tab menus 121 to 124 and a plurality of detailed menus for respective tab menus 121 to 124. For example, detailed menu 131 is a detailed menu corresponding to tab menu 121, and detailed menu 141 is a detailed menu corresponding to tab menu 122.

When a user command for instructing to call a second program selection menu is input, control circuit 31 allows display 4 to display a plurality of tab menus 121 to 124. As exemplified in FIG. 6, tab menus 121 to 124 are displayed along a top side, a left side, a bottom side, and a right side of screen 40 of display 4, respectively.

When a user command for selecting one of the plurality of tab menus 121 to 124 is input in a state in which the second program selection menu is being displayed on display 4, control circuit 31 allows display 4 to display a detailed menu corresponding to the selected one tab menu. In the present exemplary embodiment, a user command for selecting one of the plurality of tab menus 121 to 124 is input to remote controller 2, for example, by pressing down any of the up key, down key, left key, and right key of cursor key 51 of remote controller 2, and transmitted to recording and playback apparatus 1 from remote controller 2.

Detailed menus corresponding to respective tab menus 121 to 124 are also displayed, for example, along the top side, left side, bottom side, and right side of screen 40 of display 4.

When a user command for selecting tab menu 121 is input, detailed menu 131 corresponding to tab menu 121 is displayed along the top side of screen 40 of display 4, as exemplified in FIG. 7 and as with tab menu 121. Detailed menu 131 includes a plurality of icons (in an example shown in FIG. 7, a plurality of icons corresponding to channels CH1 to CH6, respectively). By clicking an icon, a plurality of pieces of program information are arranged and displayed.

When a user command for selecting tab menu 122 is input, detailed menu 141 corresponding to tab menu 122 is displayed along the left side of screen 40 of display 4, as exemplified in FIG. 8 and as with tab menu 122. Detailed menu 141 includes an array of a plurality of pieces of program information included in a classification to which program information of the program being played back belongs (in an example shown in FIG. 8, an array of pieces of program information of a plurality of programs having been broadcast on channel CH1).

When, for example, a user command for selecting tab menu 121 is input, control circuit 31 may highlight, in detailed menu 131, an icon corresponding to an array of a classification to which the program being played back belongs (in the example shown in FIG. 7, channel CH1), by cursor 132 or other display methods. In addition, when a user command for selecting tab menu 122 is input, control circuit 31 may highlight, in detailed menu 141, program information of the program being played back, by cursor 142 or other display methods.

When a user command for selecting tab menu 123 has been input, a detailed menu corresponding to tab menu 123 is displayed along the bottom side of screen 40 of display 4 (not shown), as with tab menu 123. The detailed menu (not shown) displays, for example, pieces of program information of recommended programs similar to the program being played back.

When a user command for selecting tab menu 124 is input, a detailed menu for tab menu 124 is displayed along the right side of screen 40 of display 4 (not shown), as with tab menu 124. The detailed menu (not shown) displays, for example, a list of representative scenes of the program being played back. Note that the pieces of program information of recommended programs and the list of scenes are obtained, for example, from program information server apparatus 3.

Note that display positions of tab menus 121 to 124 shown in FIG. 6 are merely an example. Positions of tab menus 121 to 124 displayed on screen 40 of display 4 may be switched.

### [1-2-2. Playback of a program using a normal recording list]

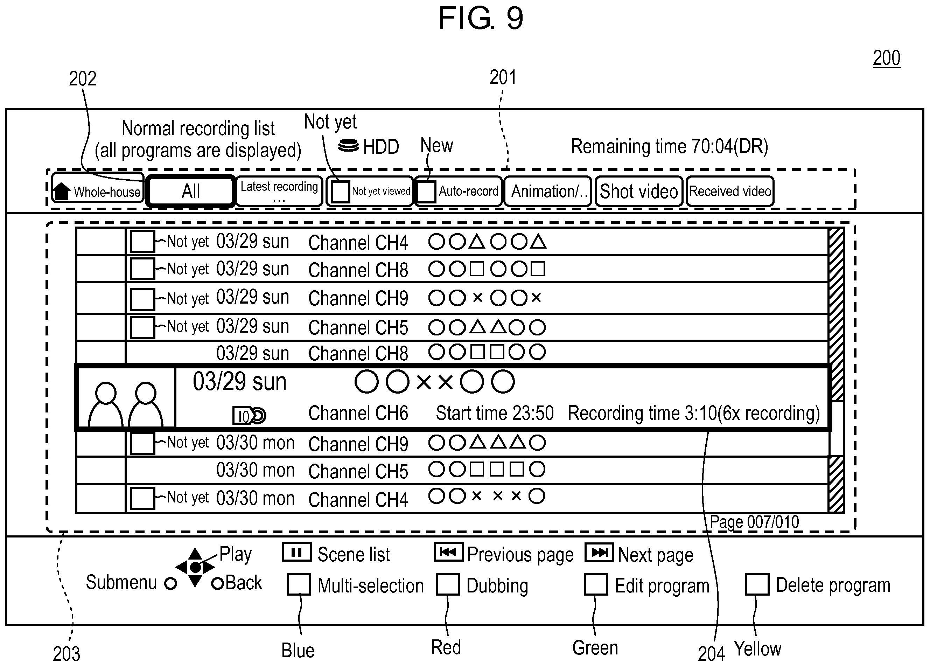

FIG. 9 is a diagram schematically showing an example of screen 200 of a first program selection menu for a normal recording list that is displayed on display 4 (see FIG. 1) when normal recording list key 54 of remote controller 2 is pressed down in a state in which recording and playback apparatus 1 of the first exemplary embodiment is not playing back a recorded program.

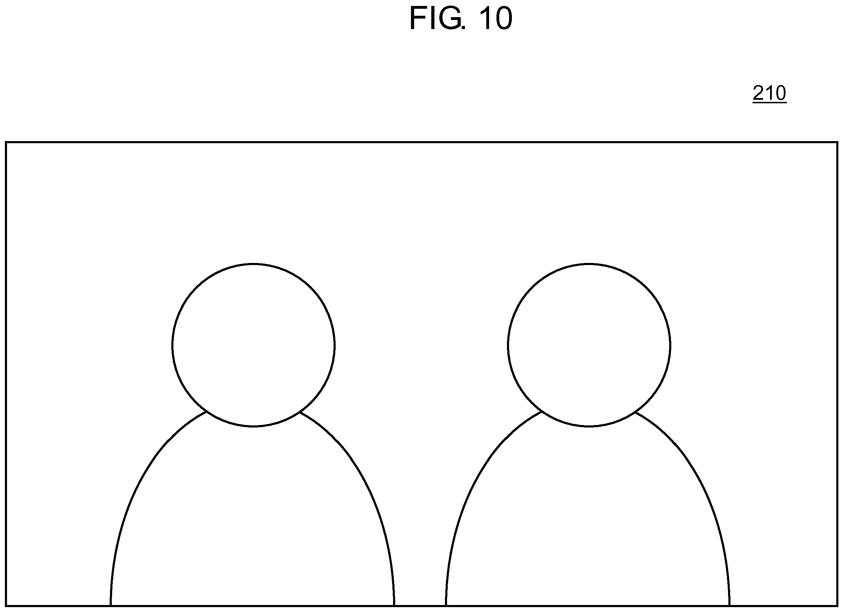

FIG. 10 is a diagram schematically showing an example of screen 210 that is displayed on display 4 (see FIG. 1) when recording and playback apparatus 1 of the first exemplary embodiment is playing back a program selected in the first program selection menu for a normal recording list shown in FIG. 9.

In recording and playback apparatus 1, when normal recording list key 54 of remote controller 2 is pressed down in a state in which a recorded program is not being played back, a first program selection menu for a normal recording list is displayed on display 4 by control circuit 31. Screen 200 of FIG. 9 shows an example of the first program selection menu for a normal recording list. The first program selection menu for a normal recording list includes a plurality of tags 201 and program list 203.

A plurality of programs recorded by normal recorder 10 are classified by a plurality of predetermined tags 201 representing program categories (e.g., genres). Then, in the first program selection menu for a normal recording list, those plurality of tags 201 are arranged and displayed on display 4.

The user can select one of the plurality of tags 201 by moving cursor 202 over the plurality of tags 201, using cursor key 51 of remote controller 2.

When one of the plurality of tags 201 is selected by cursor 202, pieces of program information of a plurality of programs having the tag are displayed in program list 203 in a chronologically arranged format. For example, an "all" tag represents all programs recorded by normal recorder 10. Therefore, when the "all" tag is selected by cursor 202, some of pieces of program information of all programs recorded by normal recorder 10 (a number of pieces of program information that can be displayed on screen 40 of display 4) are displayed in program list 203. As such, a plurality of programs recorded by normal recorder 10 are classified so as to correspond respectively to the plurality of tags 201. Then, when any of the plurality of tags 201 is selected by the user, an array where a plurality of pieces of program information having the tag are arranged chronologically is displayed in program list 203.

The user can select one of the plurality of pieces of program information displayed in program list 203 by moving cursor 204 within program list 203, using cursor key 51 of remote controller 2. When OK key 52 of remote controller 2 has been pressed down, recording and playback apparatus 1 starts playback of a program corresponding to the program information selected by cursor 204. By this, for example, as exemplified in FIG. 10, video of the program selected by the user is displayed on display 4.

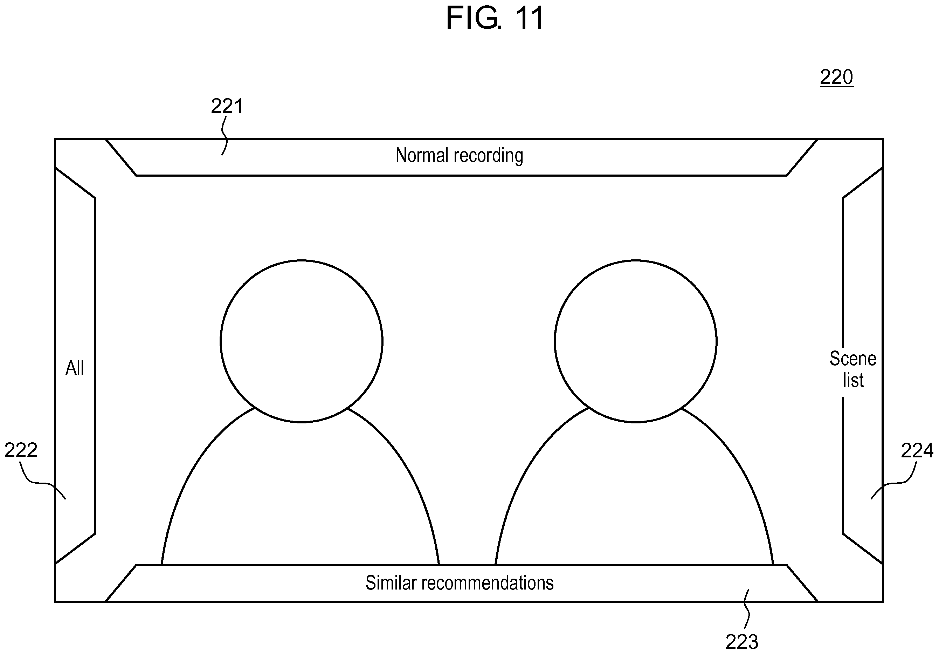

FIG. 11 is a diagram schematically showing an example of screen 220 that is displayed on display 4 (see FIG. 1) when playback menu key 56 of remote controller 2 is pressed down in a state in which recording and playback apparatus 1 of the first exemplary embodiment is playing back a program selected in the first program selection menu for a normal recording list shown in FIG. 9.

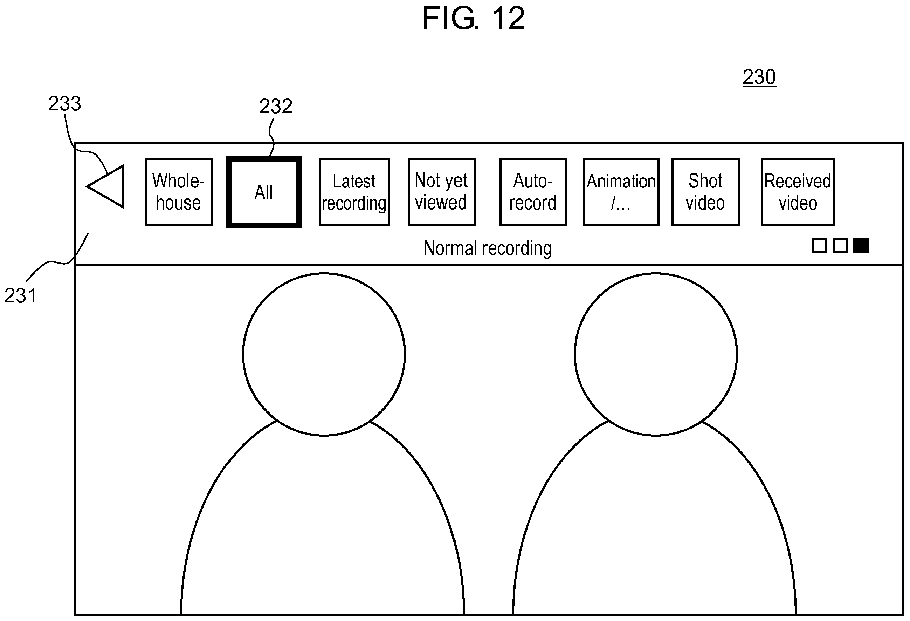

FIG. 12 is a diagram schematically showing an example of screen 230 that is displayed on display 4 (see FIG. 1) when the up key of remote controller 2 is pressed down after screen 220 shown in FIG. 11 is displayed in recording and playback apparatus 1 of the first exemplary embodiment.

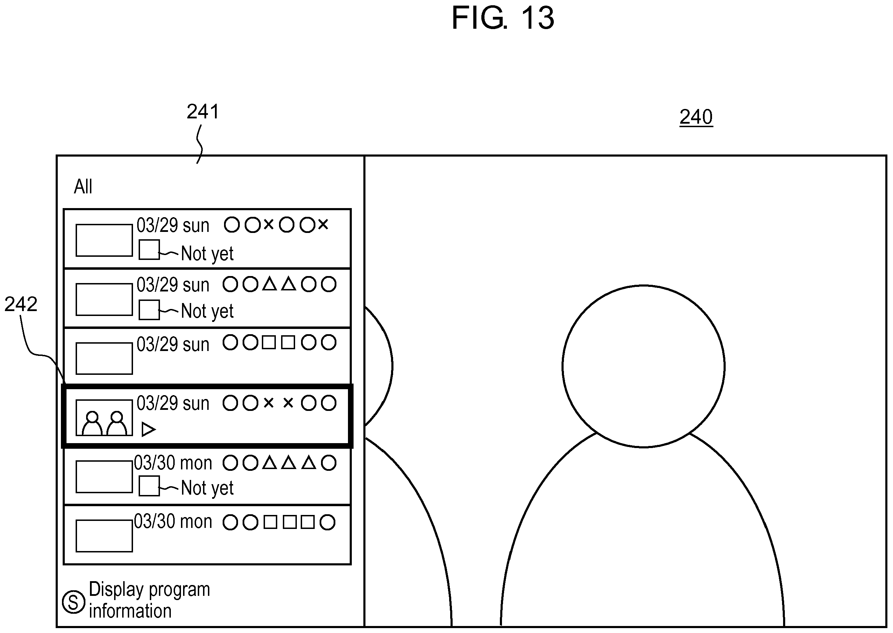

FIG. 13 is a diagram schematically showing an example of screen 240 that is displayed on display 4 (see FIG. 1) when the left key of remote controller 2 is pressed down after screen 220 shown in FIG. 11 is displayed in recording and playback apparatus 1 of the first exemplary embodiment.

Screen 220 of FIG. 11, screen 230 of FIG. 12, and screen 240 of FIG. 13 show examples of a second program selection menu for a normal recording list.

The second program selection menu includes a plurality of tab menus 221 to 224 and a plurality of detailed menus corresponding to respective tab menus 221 to 224. For example, detailed menu 231 is a detailed menu corresponding to tab menu 221, and detailed menu 241 is a detailed menu corresponding to tab menu 222.

When a user command for instructing to call a second program selection menu is input, control circuit 31 allows display 4 to display a plurality of tab menus 221 to 224. As exemplified in FIG. 11, tab menus 221 to 224 are displayed along a top side, a left side, a bottom side, and a right side of screen 40 of display 4, respectively.

When a user command for selecting one of the plurality of tab menus 221 to 224 is input in a state in which the second program selection menu is displayed on display 4, control circuit 31 allows display 4 to display a detailed menu corresponding to the selected one tab menu. In the present exemplary embodiment, a user command for selecting one of the plurality of tab menus 221 to 224 is input to remote controller 2, for example, by pressing down any of the up key, down key, left key, and right key of cursor key 51 of remote controller 2, and transmitted to recording and playback apparatus 1 from remote controller 2.

Detailed menus for respective tab menus 221 to 224 are also displayed, for example, along the top side, left side, bottom side, and right side of screen 40 of display 4.

When a user command for selecting tab menu 221 is input, detailed menu 231 corresponding to tab menu 221 is displayed along the top side of screen 40 of display 4, as exemplified in FIG. 12 and as with tab menu 221. Detailed menu 231 includes a plurality of icons (in an example shown in FIG. 12, a plurality of icons corresponding to the plurality of tags 201 shown in FIG. 9, respectively). By clicking an icon, a plurality of pieces of program information are arranged and displayed.

When a user command for selecting tab menu 222 is input, detailed menu 241 corresponding to tab menu 222 is displayed along the left side of screen 40 of display 4, as exemplified in FIG. 13 and as with tab menu 222. Detailed menu 241 includes an array of a plurality of pieces of program information included in a classification to which program information of the program being played back belongs (in an example shown in FIG. 13, pieces of program information of a plurality of programs having the "all" tag).

When, for example, a user command for selecting tab menu 221 is input, control circuit 31 may highlight, in detailed menu 231, an icon corresponding to a tag representing an array of pieces of program information of the program being played back (in the example shown in FIG. 12, the "all" tag), by cursor 232 or other display methods. In addition, when a user command for selecting tab menu 222 is input, control circuit 31 may highlight, in detailed menu 241, a piece of program information of the program being played back, by cursor 242 or other display methods.

When a user command for selecting tab menu 223 is input, a detailed menu corresponding to tab menu 223 is displayed along the bottom side of screen 40 of display 4 (not shown), as with tab menu 223. The detailed menu (not shown) displays, for example, pieces of program information of recommended programs similar to the program being played back.

When a user command for selecting tab menu 224 is input, a detailed menu corresponding to tab menu 224 is displayed along the right side of screen 40 of display 4 (not shown), as with tab menu 224. The detailed menu (not shown) displays, for example, a list of representative scenes of the program being played back. The pieces of program information of recommended programs and the list of scenes are obtained, for example, as described above, from program information server apparatus 3.

### [1-2-3. Playback of a program using a category list]

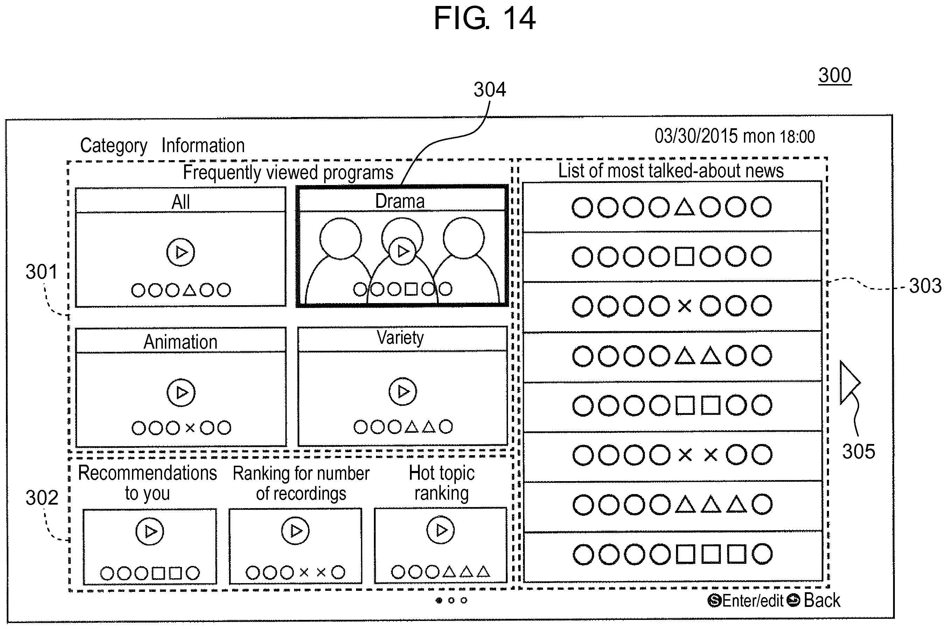

FIG. 14 is a diagram schematically showing an example of screen 300 of a first page of a first program selection menu for a category list that is displayed on display 4 (see FIG. 1) when category list key 55 of remote controller 2 is pressed down in a state in which recording and playback apparatus 1 of the first exemplary embodiment is not playing back a recorded program.

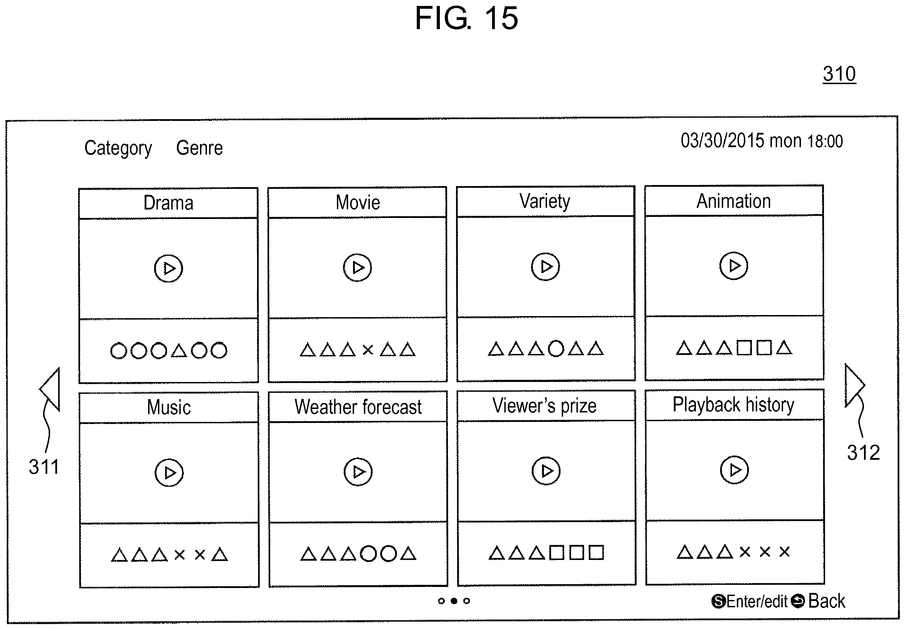

FIG. 15 is a diagram schematically showing an example of screen 310 of a second page of the first program selection menu for a category list that is displayed on display 4 (see FIG. 1) when category list key 55 of remote controller 2 is pressed down in a state in which recording and playback apparatus 1 of the first exemplary embodiment is not playing back a recorded program.

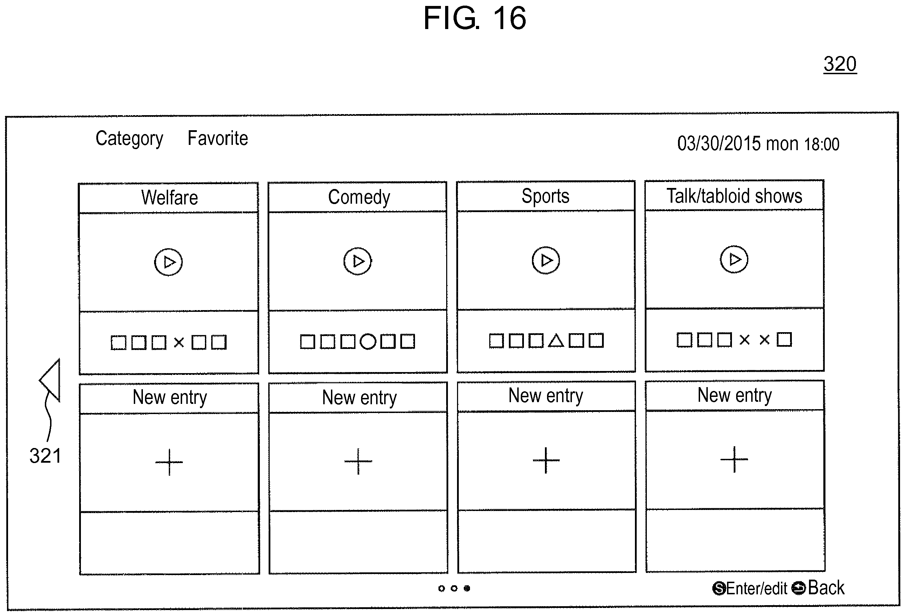

FIG. 16 is a diagram schematically showing an example of screen 320 of a third page of the first program selection menu for a category list that is displayed on display 4 (see FIG. 1) when category list key 55 of remote controller 2 is pressed down in a state in which recording and playback apparatus 1 of the first exemplary embodiment is not playing back a recorded program.

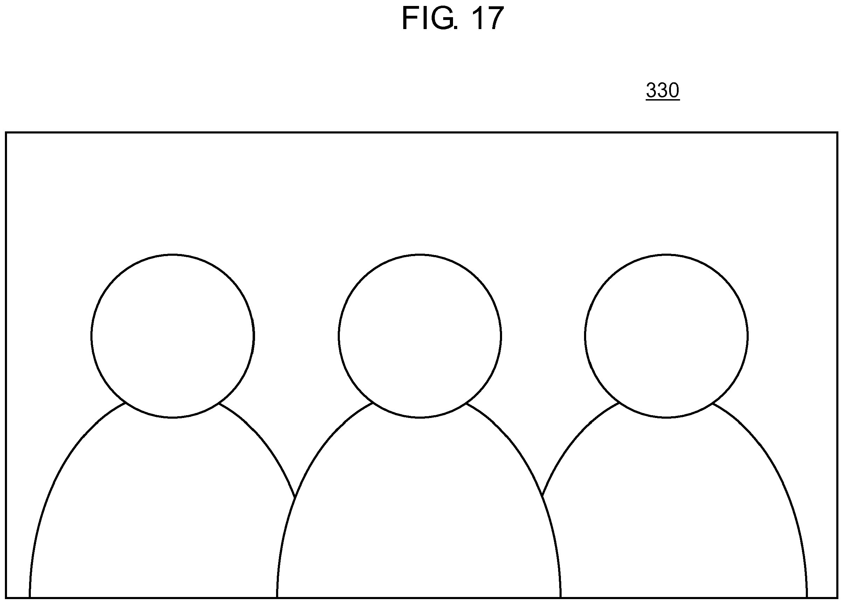

FIG. 17 is a diagram schematically showing an example of screen 330 that is displayed on display 4 (see FIG. 1) when recording and playback apparatus 1 of the first exemplary embodiment is playing back a program selected in the first program selection menu for a category list shown in FIGS. 14 to 16.

In the first program selection menu for a category list, a plurality of programs recorded by channel recorder 20 are classified into a plurality of arrays corresponding to a plurality of categories, respectively, and displayed on display 4. In the present exemplary embodiment, for example, among the plurality of programs recorded by channel recorder 20, only newly recorded programs are classified into a plurality of arrays corresponding to a plurality of categories, respectively, and displayed on display 4 and presented to the user.

In recording and playback apparatus 1, when category list key 55 of remote controller 2 is pressed down in a state in which a recorded program is not being played back, a first program selection menu for a category list is displayed on display 4 by control circuit 31. Screen 300 of FIG. 14, screen 310 of FIG. 15, and screen 320 of FIG. 16 show examples of the first program selection menu for a category list.

The first program selection menu for a category list may include a plurality of pages. The present exemplary embodiment shows an example in which a first program selection menu for a category list includes three pages (screens 300, 310, and 320).

The first page of the first program selection menu for a category list (screen 300) includes history area 301 showing categories of programs with a high viewing frequency by a user that uses recording and playback apparatus 1 (programs that are frequently viewed by the user); ranking area 302 showing program ranking; and news area 303 showing a list of most talked-about news. The program ranking and the list of most talked-about news are obtained, for example, from program information server apparatus 3, as with pieces of program information of recommended programs and a list of scenes.

The second page of the first program selection menu for a category list (screen 310) displays categories of programs classified by genre. The third page of the first program selection menu for a category list (screen 320) displays categories of programs searched by conditions (genres, keywords, and the like) set by the user. Button of each category displayed on each of screens 300, 310, and 320 displays, for example, a thumbnail image of one of a plurality of programs included in that category.

The user can display any one of the three pages (screens 300, 310, and 320) on display 4 by turning the pages of the first program selection menu for a category list, using cursor key 51 of remote controller 2. The user can also turn the pages of the first program selection menu using the motion function of remote controller 2, instead of pressing down cursor key 51. For example, the pages of the first program selection menu may be turned by selecting button 305 shown in FIG. 14, or button 311 to 312 shown in FIG. 15, or button 321 shown in FIG. 16 by a cursor that moves by the motion function when motion key 57 of remote controller 2 is pressed down by the user.

In addition, the user can select one of the plurality of pieces of program information displayed in the first program selection menu by moving cursor 304 within the first program selection menu using cursor key 51 of remote controller 2. When OK key 52 of remote controller 2 is pressed down, recording and playback apparatus 1 starts playback of a program corresponding to the program information selected by cursor 304. By this, for example, as exemplified in FIG. 17, video of the program selected by the user is displayed on display 4.

In addition, when the first page of the first program selection menu for a category list is displayed, if one of the plurality of categories displayed in history area 301 is selected, unviewed programs in that category are played back and displayed on display 4 in order of oldest first (in chronological order), according to a user's playback history. When one of the categories of a plurality of rankings displayed in ranking area 302 is selected, programs in that category are played back and displayed on display 4 in order of ranking. When one of the categories of a plurality of pieces of news displayed in news area 303 is selected, scenes of news in that category are played back and displayed on display 4 in descending order of a number of broadcasts. When the second page of the first program selection menu for a category list is displayed, if one of the plurality of categories displayed on screen 310 is selected, a latest program in that category is played back and displayed on display 4. When the third page of the first program selection menu for a category list is displayed, if one of the plurality of categories displayed on screen 320 is selected, a latest program in that category is played back and displayed on display 4.

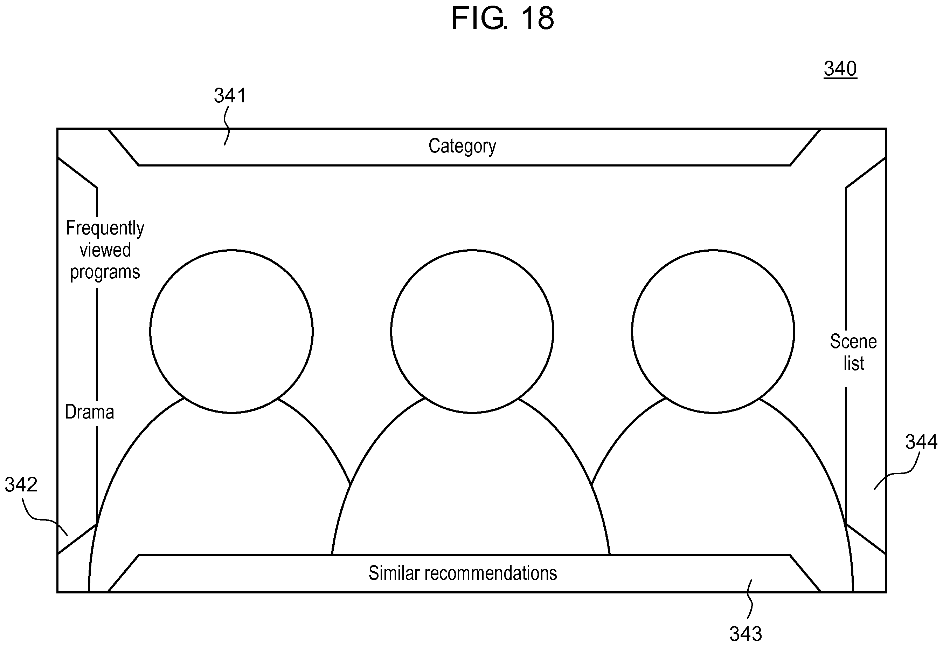

FIG. 18 is a diagram schematically showing an example of screen 340 that is displayed on display 4 (see FIG. 1) when playback menu key 56 of remote controller 2 is pressed down in a state in which recording and playback apparatus 1 of the first exemplary embodiment is playing back a program selected in the first program selection menu for a category list shown in FIGS. 14 to 16.

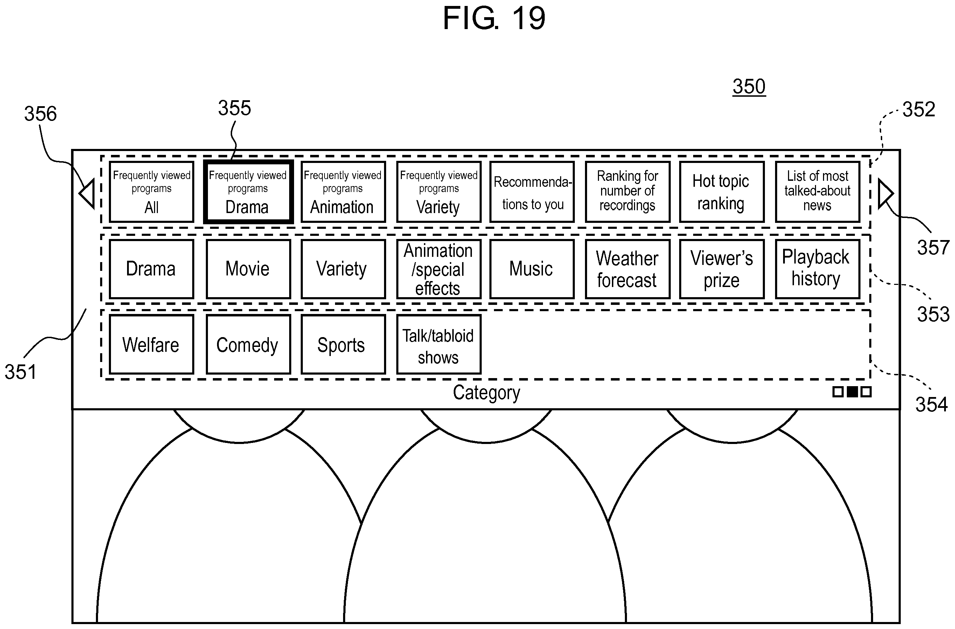

FIG. 19 is a diagram schematically showing an example of screen 350 that is displayed on display 4 (see FIG. 1) when the up key of remote controller 2 is pressed down after screen 340 shown in FIG. 18 is displayed in recording and playback apparatus 1 of the first exemplary embodiment.

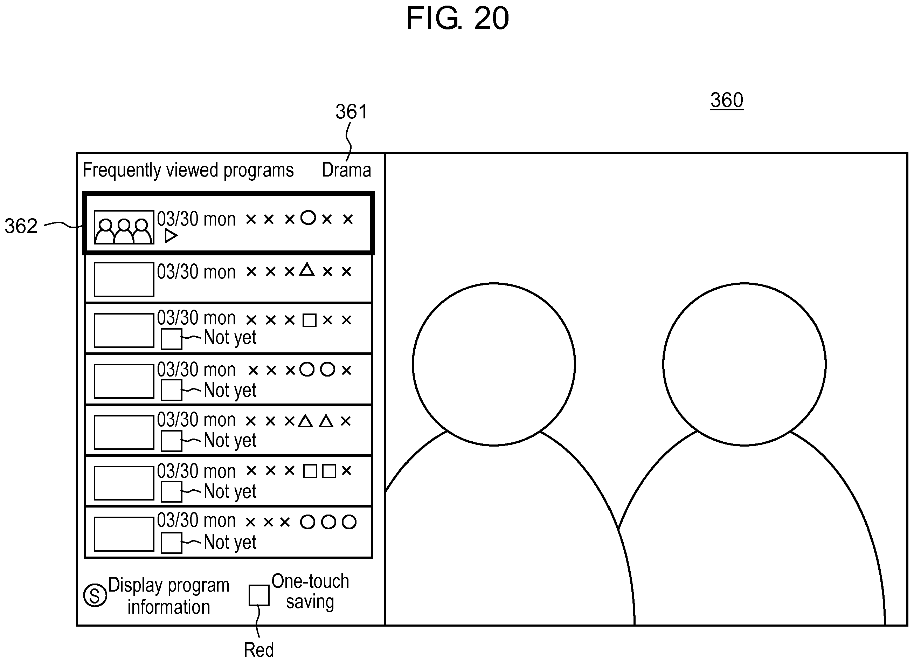

FIG. 20 is a diagram schematically showing an example of screen 360 that is displayed on display 4 (see FIG. 1) when the left key of remote controller 2 is pressed down after screen 340 shown in FIG. 18 is displayed in recording and playback apparatus 1 of the first exemplary embodiment.

Screen 340 of FIG. 18, screen 350 of FIG. 19, and screen 360 of FIG. 20 show examples of a second program selection menu for a category list.

The second program selection menu includes a plurality of tab menus 341 to 344 and a plurality of detailed menus corresponding to respective tab menus 341 to 344. For example, detailed menu 351 is a detailed menu corresponding to tab menu 341, and detailed menu 361 is a detailed menu corresponding to tab menu 342.

When a user command for instructing to call a second program selection menu is input, control circuit 31 allows display 4 to display a plurality of tab menus 341 to 344. As exemplified in FIG. 18, tab menus 341 to 344 are displayed along a top side, a left side, a bottom side, and a right side of screen 40 of display 4, respectively.

When a user command for selecting one of the plurality of tab menus 341 to 344 is input in a state in which the second program selection menu is displayed on display 4, control circuit 31 allows display 4 to display a detailed menu corresponding to the selected one tab menu. In the present exemplary embodiment, a user command for selecting one of the plurality of tab menus 341 to 344 is input to remote controller 2, for example, by pressing down any of the up key, down key, left key, and right key of cursor key 51 of remote controller 2, and transmitted to recording and playback apparatus 1 from remote controller 2.

Detailed menus for respective tab menus 341 to 344 are also displayed, for example, along the top side, left side, bottom side, and right side of screen 40 of display 4.

When a user command for selecting tab menu 341 is input, detailed menu 351 corresponding to tab menu 341 is displayed along the top side of screen 40 of display 4, as exemplified in FIG. 19 and as with tab menu 341. Detailed menu 351 includes a plurality of icons (in an example shown in FIG. 19, a plurality of icons corresponding to the plurality of categories shown in FIGS. 14 to 16, respectively). By clicking an icon, a plurality of pieces of program information are arranged and displayed.

In the example shown in FIG. 19, information area 352 in a first row of detailed menu 351 arranges and displays a plurality of icons corresponding to the categories shown in FIG. 14, respectively. Genre area 353 in a second row of detailed menu 351 arranges and displays a plurality of icons corresponding to the categories shown in FIG. 15, respectively. Favorite area 354 in a third row of detailed menu 351 arranges and displays a plurality of icons corresponding to the categories shown in FIG. 16, respectively.

When a user command for selecting tab menu 342 is input, detailed menu 361 corresponding to tab menu 342 is displayed along the left side of screen 40 of display 4, as exemplified in FIG. 20 and as with tab menu 342. Detailed menu 361 includes an array of a plurality of pieces of program information included in a category to which program information of the program being played back belongs (in an example shown in FIG. 20, pieces of program information of a plurality of programs that belong to a "frequently viewed programs - drama" category).

In case where an array of pieces of program information displayed in detailed menu 361 shows, for example, ranking for a number of recordings or most talked-about news, the pieces of program information are arranged and displayed in order of ranking. In case where an array of pieces of program information displayed in detailed menu 361 shows a genre such as a drama, the pieces of program information are arranged and displayed in order of oldest first. In case where an array of pieces of program information displayed in detailed menu 361 shows a playback history, the pieces of program information are arranged and displayed in order of newest first.

When, for example, a user command for selecting tab menu 341 is input, control circuit 31 may highlight, in detailed menu 351, an icon corresponding to a category to which program information of the program being played back belongs (in the example shown in FIG. 19, the "frequently viewed programs - drama" category), by cursor 355 or other display methods. In addition, when a user command for selecting tab menu 342 is input, control circuit 31 may highlight, in detailed menu 361, program information of the program being played back, by cursor 362 or other display methods.

When a user command for selecting tab menu 343 is input, a detailed menu corresponding to tab menu 343 is displayed along the bottom side of screen 40 of display 4 (not shown), as with tab menu 343. The detailed menu (not shown) displays, for example, pieces of program information of recommended programs similar to the program being played back.

When a user command for selecting tab menu 344 is input, a detailed menu corresponding to tab menu 344 is displayed along the right side of screen 40 of display 4 (not shown), as with tab menu 344. The detailed menu (not shown) displays, for example, a list of representative scenes of the program being played back. The pieces of program information of recommended programs and the list of scenes are obtained, for example, as described above, from program information server apparatus 3.

Note that the first program selection menu for a category list may include only a screen of one page, or may include screens of two pages, or may include screens of four or more pages. In addition, the first program selection menus for a channel recording list and for a normal recording list may include screens of two or more pages.

### [1-2-4. Transition between program selection menus]

When, in a state in which a second program selection menu is being displayed on display 4, a user command is input to instruct to display another second program selection menu that uses a different classification method than a classification method used by the second program selection menu being displayed on display 4, control circuit 31 can allow display 4 to display another second program selection menu, according to the user command. Namely, when one detailed menu among the detailed menu of the channel recording list shown in FIG. 7, the detailed menu of the normal recording list shown in FIG. 12, and the detailed menu of the category list shown in FIG. 19 is displayed on display 4, control circuit 31 can switch the detailed menu displayed on display 4 to another one of those detailed menus, according to a user command.

The user can switch a second program selection menu displayed on display 4, using cursor key 51 of remote controller 2. The user can also switch a second program selection menu using the motion function of remote controller 2, instead of pressing down cursor key 51. For example, the second program selection menu may be switched by selecting button 133 shown in FIG. 7, or button 233 shown in FIG. 12, or button 356, 357 shown in FIG. 19 by a cursor that moves by the motion function when motion key 57 of remote controller 2 is pressed down by the user.

### [1-2-5. Playback of a program using zapping]

Recording and playback apparatus 1 may create a third program selection menu and display the third program selection menu on display 4 in a state in which a recorded program is being played back. The third program selection menu is a program selection menu for allowing the user to easily select and play back another program information adjacent to program information of a program being played back in a plurality of arrays where pieces of program information are arranged, in a program selection menu (a channel recording list, a normal recording list, or a category list) used when the program being played back is selected. The third program selection menu is created for a purpose of enabling the user to more easily select another program information than a first program selection menu and a second program selection menu.

UI creating circuit 36 creates a UI image of a third program selection menu to be displayed on display 4, when a recorded program is being played back. The third program selection menu includes at least one piece of program information adjacent to program information of a program being played back in a plurality of arrays of a plurality of pieces of program information which are classified by at least one of a plurality of classification methods.

When a user command for instructing to call a third program selection menu is input in a state in which a recorded program is being played back, a third program selection menu is displayed on display 4 by control circuit 31. The third program selection menu is a program selection menu that uses a classification method conforming to a program selection menu that is used when the program being played back is selected. For example, when a program selected in a first program selection menu (or a second program selection menu) for a channel recording list is being played back, if a user command for instructing to call a third program selection menu is input, then a third program selection menu conforming to a channel recording list format is displayed on display 4. Likewise, when a program selected in a first program selection menu (or a second program selection menu) for a normal recording list is being played back, a third program selection menu conforming to a normal recording list format is displayed on display 4, and when a program selected in a first program selection menu (or a second program selection menu) for a category list is being played back, a third program selection menu conforming to a category list format is displayed on display 4. Note that in the present exemplary embodiment a user command for instructing to call a third program selection menu is input to remote controller 2, for example, by pressing down one of the up/down/left/right keys of remote controller 2, and transmitted to recording and playback apparatus 1 from remote controller 2.

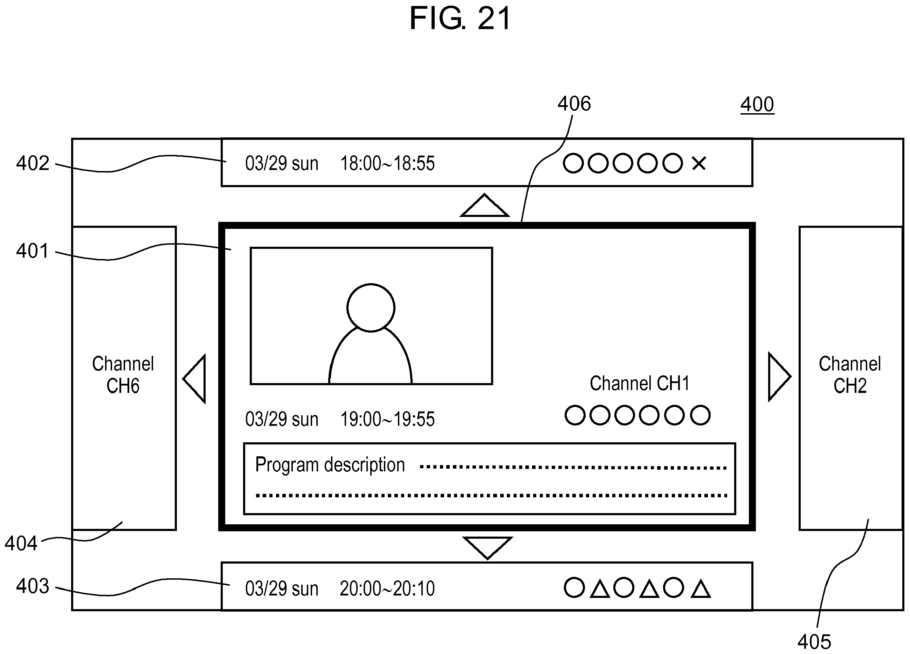

FIG. 21 is a diagram schematically showing an example of screen 400 that is displayed on display 4 (see FIG. 1) when one of the up/down/left/right keys of remote controller 2 is pressed down in a state in which recording and playback apparatus 1 of the first exemplary embodiment is playing back a program selected in the first program selection menu for a channel recording list shown in FIG. 4. Screen 400 of FIG. 21 shows an example of a third program selection menu for a channel recording list.

The third program selection menu for a channel recording list includes at least one piece of program information adjacent to program information of a program being played back in arrays of a plurality of pieces of program information for the respective channels in the first program selection menu for a channel recording list shown in FIG. 4.

Screen 400 which is an example of the third program selection menu for a channel recording list includes, at a center of screen 400, button 401 corresponding to a program being played back. Button 401 displays a thumbnail image, a channel, recording date and time, a title name, and program content information of the program.

The third program selection menu for a channel recording list further includes button 402, button 403, button 404, and button 405. Button 402 is a button disposed above button 401 within screen 400 and corresponding to a program immediately before the program being played back (a program that is represented by program information displayed immediately above program information representing the program being played back in the first program selection menu for a channel recording list. See FIG. 4). Button 403 is a button disposed below button 401 within screen 400 and corresponding to a program immediately after the program being played back (a program that is represented by program information displayed immediately below the program information representing the program being played back in the first program selection menu for a channel recording list. See FIG. 4). Button 404 is a button disposed on a left side of button 401 within screen 400 and corresponding to a channel adjacent, on a left, to a channel having broadcast the program being played back (a channel including program information that is displayed on a left side of the program information representing the program being played back in the first program selection menu for a channel recording list. See FIG. 4). Button 405 is a button disposed on a right side of button 401 within screen 400 and corresponding to a channel adjacent, on a right, to the channel having broadcast the program being played back (a channel including program information that is displayed on a right side of the program information representing the program being played back in the first program selection menu for a channel recording list. See FIG. 4).

Note that although screen 100 of the first program selection menu for a channel recording list exemplified in FIG. 4 has cursor 103 at a left edge, it is assumed that cursor 103 moves to a position of channel CH6 by further moving cursor 103 left. At this time, entire displayed program information may slide in a right direction. As such, it is assumed that in screen 100 of the first program selection menu for a channel recording list exemplified in FIG. 4, an array of channel CH6 is disposed on a left side of an array of channel CH1 and the array of channel CH1 is disposed on a right side of the array of channel CH6. In addition, although screen 100 has cursor 103 at an upper end, it is assumed that when cursor 103 is moved up, the entire displayed program information slides in a down direction and pieces of program information between 6:00 pm and 7:00 pm are displayed, and cursor 103 moves to a position of a piece of program information between 6:00 pm and 7:00 pm.

Button 402 displays recording date and time and a title name which are a part of program information of a program at time immediately before the program being played back. Button 403 displays recording date and time and a title name which are a part of program information of a program at time immediately after the program being played back. Button 404 displays a character string representing a channel adjacent, on a left, to a channel including program information of the program being played back in the first program selection menu for a channel recording list shown in FIG. 4 (in case where there is no channel adjacent on the left, a channel displayed at a right edge of the first program selection menu for a channel recording list). Button 405 displays a character string representing a channel adjacent, on a right, to the channel including program information of the program being played back in the first program selection menu for the channel recording list of FIG. 4 (in case where there is no channel adjacent on the right, a channel displayed at a left edge of the first program selection menu for a channel recording list).

The user can select one of the plurality of buttons displayed in the third program selection menu, by moving cursor 406 within the third program selection menu for a channel recording list, using cursor key 51 of remote controller 2. Namely, the user can select one of a plurality of pieces of program information displayed in the third program selection menu. Program information selection operation which is performed by the user on the third program selection menu is hereinafter referred to as "zapping". In addition, a function of implementing zapping is referred to as a "zapping function".

When the user moves cursor 406 to button 404 or button 405, a program is selected that temporally overlaps the program being played back in terms of a start time and that is included in a channel adjacent (adjacent on a right or left) to a channel including the program being played back in the first program selection menu for a channel recording list exemplified in FIG. 4.

When the user moves cursor 406, a button that is a movement destination of cursor 406 moves to a position of button 401 and becomes new button 401, and a thumbnail image, a channel, recording date and time, a title name, and program content information of a program corresponding to the button that is the movement destination of cursor 406 are newly displayed on button 401. Then, pieces of program information to be displayed on buttons 402 to 405 are updated in a same manner as that described above, according to the program information that is newly displayed on button 401. When OK key 52 of remote controller 2 is pressed down, recording and playback apparatus 1 starts playback of the program corresponding to the button selected by cursor 406.

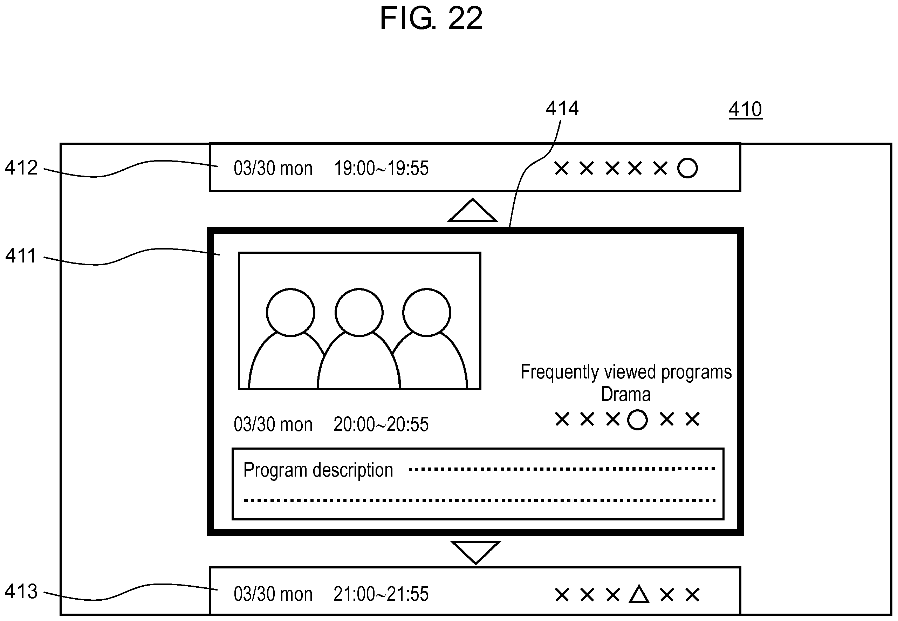

FIG. 22 is a diagram schematically showing an example of screen 410 that is displayed on display 4 (see FIG. 1) when one of the up/down/left/right keys of remote controller 2 is pressed down in a state in which recording and playback apparatus 1 of the first exemplary embodiment is playing back a program selected in the first program selection menu for a category list shown in FIGS. 14 to 16. Screen 410 of FIG. 22 shows an example of a third program selection menu for a category list.

The third program selection menu for a category list includes at least one piece of program information adjacent to program information of a program being played back in an array of a plurality of pieces of program information in a category list. For example, the third program selection menu for a category list includes pieces of program information of programs immediately before and immediately after a program being played back in an array of a category to which the program being played back belongs (e.g., an array in detailed menu 361 shown in FIG. 20) (e.g., pieces of program information arranged immediately above and immediately below program information of a program being played back in the array in detailed menu 361 shown in FIG. 20).

Screen 410 which is an example of the third program selection menu for a category list includes, at a center of screen 410, button 411 corresponding to the program being played back. Button 411 displays a thumbnail image, a channel, recording date and time, a title name, and program content information of the program.

The third program selection menu for a category list further includes button 412 and button 413. Button 412 is a button disposed above button 411 within screen 410 and corresponding to a program immediately before the program being played back (e.g., a program that is represented by program information displayed immediately above program information representing the program being played back in the array in detailed menu 361 shown in FIG. 20). Button 413 is a button disposed below button 411 within screen 410 and corresponding to a program immediately after the program being played back (e.g., a program that is represented by program information displayed immediately below the program information representing the program being played back in the array in detailed menu 361 shown in FIG. 20).

Button 412 displays recording date and time and a title name which are a part of program information of the program immediately before the program being played back. Button 413 displays recording date and time and a title name which are a part of program information of the program immediately after the program being played back.

The user can select one of the plurality of buttons displayed in the third program selection menu, by moving cursor 414 within the third program selection menu for a category list, using cursor key 51 of remote controller 2. Namely, the user can select one of a plurality of pieces of program information displayed in the third program selection menu. In the present exemplary embodiment, this selection operation is also referred to as zapping, and a function of implementing the zapping is also referred to as a zapping function.

When the user moves cursor 414, a button that is a movement destination of cursor 414 moves to a position of button 411 and becomes new button 411, and a thumbnail image, a channel, recording date and time, a title name, and program content information of a program corresponding to the button that is the movement destination of cursor 414 are newly displayed on button 411. Then, pieces of program information to be displayed on buttons 412, 413 are updated in a same manner as that described above, according to the program information that is newly displayed on button 411. When OK key 52 of remote controller 2 is pressed down, recording and playback apparatus 1 starts playback of the thumbnail image of the program corresponding to the button selected by cursor 414.

Note that when the user selects a program using the third program selection menu for a category list, the left key and right key of cursor key 51 may be invalid.

Note that the above-described description describes exemplary operation where, when a third program selection menu for a category list is displayed, by pressing down OK key 52 of remote controller 2, playback of a thumbnail image of a program corresponding to a button selected by cursor 414 starts; however, the present exemplary embodiment is not limited to the exemplary operation. For example, when a third program selection menu for a category list is displayed, playback of video of a program corresponding to a button that is a movement destination of cursor 414 may start immediately.

Note that the third program selection menu for a category list exemplified in FIG. 22 is for an array of the "frequently viewed programs - drama" category in detailed menu 361 exemplified in FIG. 20, but this is merely an example. In addition, although screen 410 of the third program selection menu for a category list exemplified in FIG. 22 does not display buttons corresponding to the left key and right key of cursor key 51 of remote controller 2, buttons for moving to other categories using the left key and right key of cursor key 51 may be added to screen 410. For example, buttons for selecting other categories in detailed menu 351 of the category list exemplified in FIG. 19 (e.g., "frequently viewed programs - all" and "frequently viewed programs - animation" categories which are adjacent, on a left and a right, to the "frequently viewed programs - drama" category) may be added to screen 410 shown in FIG. 22, and these categories may be selected by using the left key and right key of cursor key 51.

### [1-2-6. End of playback]

When playback of a recorded program has ended, control circuit 31 allows display 4 to display a first program selection menu that uses a same classification method as a first program selection menu or a second program selection menu that is used when the program whose playback has ended is selected.

Control circuit 31 may highlight the program whose playback has ended, in the first program selection menu that is displayed on display 4 after the playback of the program has ended.

### [1-2-7. Flowchart]

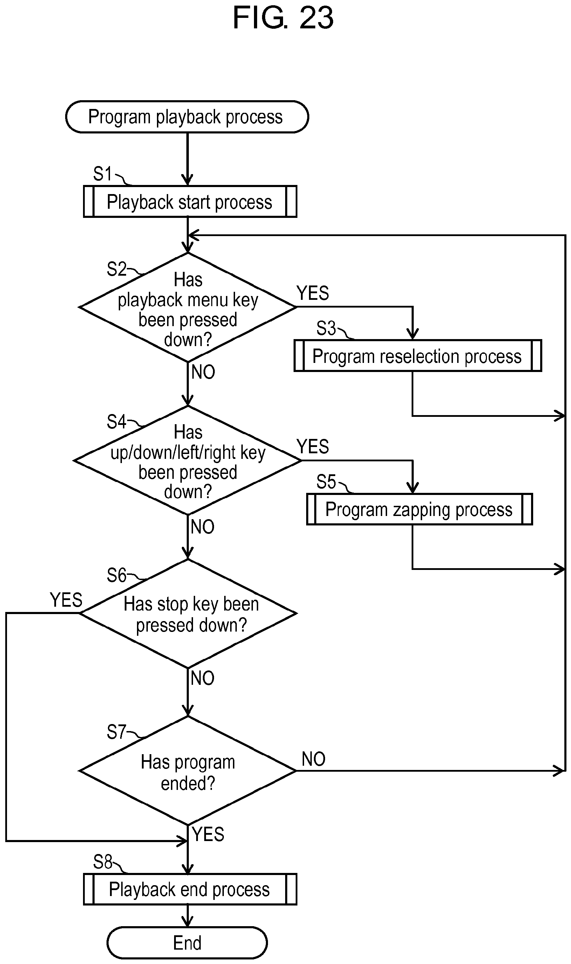

Next, with reference to FIGS. 23 to 29, operation of recording and playback apparatus 1 will be described.

FIG. 23 is a flowchart showing an example of a program playback process performed by control circuit 31 included in recording and playback apparatus 1 of the first exemplary embodiment.

Control circuit 31 performs a playback start process and starts playback of one of a plurality of recorded programs (step S1). A detail of the playback start process at step S1 will be described later.

Then, control circuit 31 determines whether a user command for instructing to call a second program selection menu has been received (i.e., whether playback menu key 56 of remote controller 2 has been pressed down) (step S2).

In case where it is determined at step S2 that a user command for instructing to call a second program selection menu has been received (YES at step S2), control circuit 31 performs a program reselection process (step S3). Control circuit 31 starts playback of another program different than the program being played back, as necessary. A detail of the program reselection process at step S3 will be described later. After control circuit 31 performs the process at step S3, control circuit 31 brings processing back to step S2.

In case where it is determined at step S2 that a user command for instructing to call a second program selection menu has not been received (NO at step S2), control circuit 31 determines whether a user command for instructing to call a third program selection menu has been received (i.e., whether the up/down/left/right key of cursor key 51 of remote controller 2 has been pressed down in a state in which the recorded program is being played back) (step S4).

In case where it is determined at step S4 that a user command for instructing to call a third program selection menu has been received (YES at step S4), control circuit 31 performs a program zapping process (step S5). Control circuit 31 starts playback of another program different than the program being played back, as necessary. A detail of the program zapping process at step S5 will be described later. After control circuit 31 performs the process at step S5, control circuit 31 brings processing back to step S2.

In case where it is determined at step S4 that a user command for instructing to call a third program selection menu has not been received (NO at step S4), control circuit 31 determines whether a user command for instructing to stop the playback of the program has been received (i.e., whether stop key 58 of remote controller 2 (see FIG. 2) has been pressed down) (step S6).

In case where it is determined at step S6 that a user command for instructing to stop the playback of the program has not been received (NO at step S6), control circuit 31 determines whether the program being played back has ended (i.e., whether the program being played back has been played back until an end) (step S7).

In case where it is determined at step S7 that the program being played back has not ended (NO at step S7), control circuit 31 brings processing back to step S2.

In case where it is determined at step S6 that a user command for instructing to stop the playback of the program has been received (YES at step S6) or in case where it is determined at step S7 that the program being played back has ended (YES at step S7), control circuit 31 performs a playback end process and allows display 4 to display one of a channel recording list, a normal recording list, and a category list (step S8). A detail of the playback end process at step S8 will be described later.

Next, the playback start process at step S1 will be described.

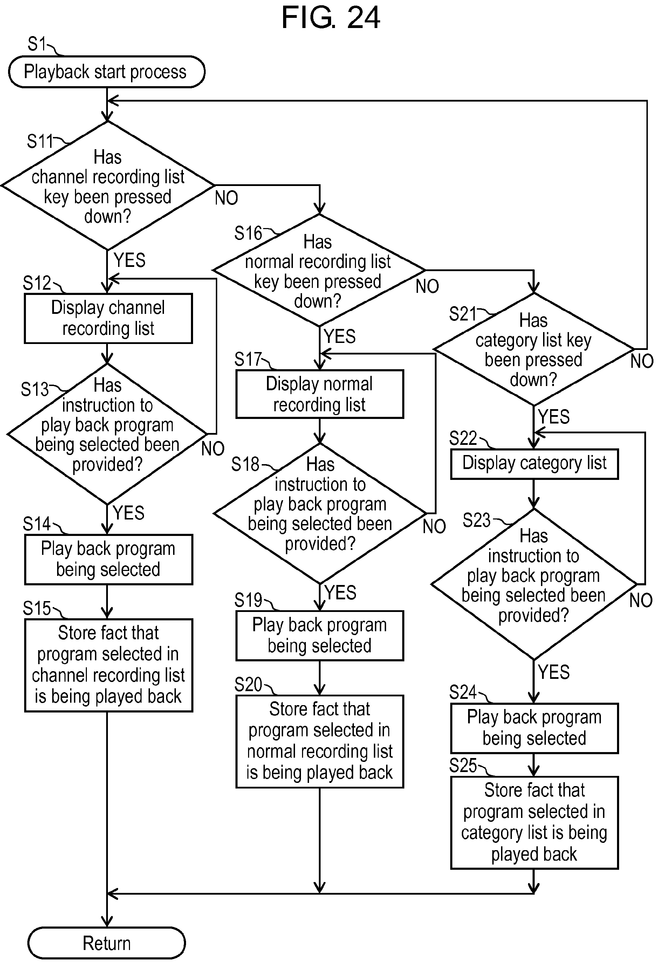

FIG. 24 is a flowchart showing an example of a subroutine of the playback start process performed by control circuit 31 included in recording and playback apparatus 1 of the first exemplary embodiment.

When the playback start process at step S1 starts, control circuit 31 determines whether a user command for instructing to display a channel recording list has been received (i.e., whether channel recording list key 53 of remote controller 2 has been pressed down in a state in which a recorded program is not being played back) (step S11).

In case where it is determined at step S11 that a user command for instructing to display a channel recording list has been received (YES at step S11), control circuit 31 displays a first program selection menu for a channel recording list (see FIG. 4) on display 4 (step S12).

Then, control circuit 31 determines whether a user command for instructing to play back a program corresponding to program information selected by cursor 103 in the first program selection menu for a channel recording list (hereinafter, referred to as a "program being selected") has been received (i.e., whether OK key 52 of remote controller 2 has been pressed down) (step S13).

In case where it is determined at step S13 that a user command for instructing to play back a program being selected has not been received (NO at step S13), control circuit 31 brings processing back to step S12.

In case where it is determined at step S13 that a user command for instructing to play back a program being selected has been received (YES at step S13), control circuit 31 starts playback of the program being selected (see FIG. 5) (step S14).

Then, control circuit 31 stores a fact that the program selected in the first program selection menu for a channel recording list is being played back (step S15). Thereafter, control circuit 31 returns the subroutine of the playback start process and brings processing back to step S2 shown in FIG. 23.

In case where it is determined at step S11 that a user command for instructing to display a channel recording list has not been received (NO at step S11), control circuit 31 determines whether a user command for instructing to display a normal recording list has been received (i.e., whether normal recording list key 54 of remote controller 2 has been pressed down in a state in which a recorded program is not being played back) (step S16).

In case where it is determined at step S16 that a user command for instructing to display a normal recording list has been received (YES at step S16), control circuit 31 displays a first program selection menu for a normal recording list (see FIG. 9) on display 4 (step S17).

Then, control circuit 31 determines whether a user command for instructing to play back a program corresponding to program information selected by cursor 204 in the first program selection menu for a normal recording list (hereinafter, referred to as a "program being selected") has been received (i.e., whether OK key 52 of remote controller 2 has been pressed down or not) (step S18).

In case where it is determined at step S18 that a user command for instructing to play back a program being selected has not been received (NO at step S18), control circuit 31 brings processing back to step S17.

In case where it is determined at step S18 that a user command for instructing to play back a program being selected has been received (YES at step S18), control circuit 31 starts playback of the program being selected (see FIG. 10) (step S19).

Then, control circuit 31 stores a fact that the program selected in the first program selection menu for a normal recording list is being played back (step S20). Thereafter, control circuit 31 returns the subroutine of the playback start process and brings processing back to step S2 shown in FIG. 23.

In case where it is determined at step S16 that a user command for instructing to display a normal recording list has not been received (NO at step S16), control circuit 31 determines whether a user command for instructing to display a category list has been received (i.e., whether category list key 55 of remote controller 2 has been pressed down in a state in which a recorded program is not being played back) (step S21).

In case where it is determined at step S21 that a user command for instructing to display a category list has not been received (NO at step S21), control circuit 31 brings processing back to step S11.

In case where it is determined at step S21 that a user command for instructing to display a category list has been received (YES at step S21), control circuit 31 displays a first program selection menu for a category list (see FIGS. 14 to 16) on display 4 (step S22).

Then, control circuit 31 determines whether a user command for instructing to play back a program corresponding to program information selected by cursor 304 in the first program selection menu for a category list (hereinafter, referred to as a "program being selected") has been received (i.e., whether OK key 52 of remote controller 2 has been pressed down) (step S23).

In case where it is determined at step S23 that a user command for instructing to play back a program being selected has not been received (NO at step S23), control circuit 31 brings processing back to step S22.

In case where it is determined at step S23 that a user command for instructing to play back a program being selected has been received (YES at step S23), control circuit 31 starts playback of the program being selected (see FIG. 17) (step S24).

Then, control circuit 31 stores a fact that the program selected in the first program selection menu for a category list is being played back (step S25). Thereafter, control circuit 31 returns the subroutine of the playback start process and brings processing back to step S2 shown in FIG. 23.

Next, the program reselection process at step S3 will be described.

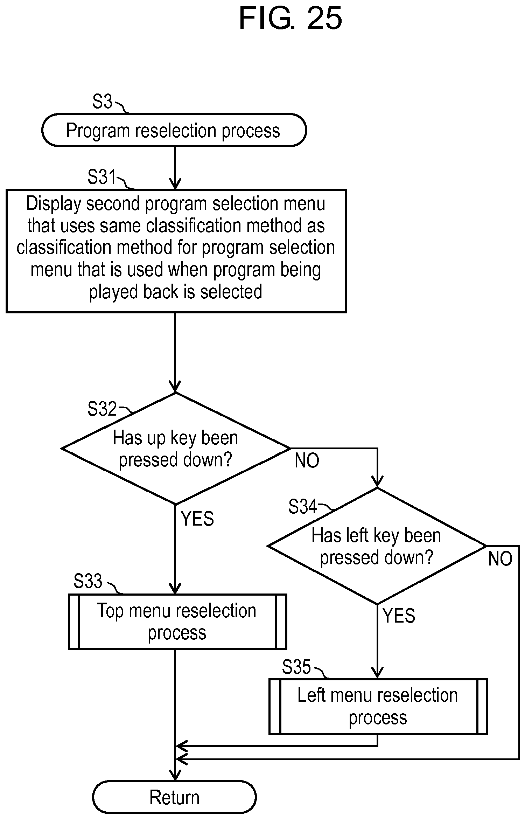

FIG. 25 is a flowchart showing an example of a subroutine of the program reselection process performed by control circuit 31 included in recording and playback apparatus 1 of the first exemplary embodiment.

When the program reselection process at step S3 starts, control circuit 31 displays, on display 4, a second program selection menu (see FIG. 6, 11, or 18) that classified by a same classification method as a program selection menu used when the program being played back is selected (step S31).

Then, control circuit 31 determines whether a user command for instructing to display a detailed menu along the top side of screen 40 of display 4 has been received (i.e., the up key of cursor key 51 of remote controller 2 has been pressed down) (step S32).

In case where it is determined at step S32 that a user command for instructing to display a detailed menu along the top side of screen 40 has been received (YES at step S32), control circuit 31 performs a top menu reselection process (step S33). A detail of the top menu reselection process at step S33 will be described later.

After control circuit 31 performs the process at step S33, control circuit 31 returns the subroutine of the program reselection process and brings processing back to step S2 shown in FIG. 23.

In case where it is determined at step S32 that a user command for instructing to display a detailed menu along the top side of screen 40 has not been received (NO at step S32), control circuit 31 determines whether a user command for instructing to display a detailed menu along the left side of screen 40 of display 4 has been received (i.e., whether the left key of cursor key 51 of remote controller 2 has been pressed down) (step S34).

In case where it is determined at step S34 that a user command for instructing to display a detailed menu along the left side of screen 40 has not been received (NO at step S34), control circuit 31 returns the subroutine of the program reselection process and brings processing back to step S2 shown in FIG. 23.

In case where it is determined at step S34 that a user command for instructing to display a detailed menu along the left side of screen 40 has been received (YES at step S34), control circuit 31 performs a left menu reselection process (step S35). A detail of the left menu reselection process at step S35 will be described later.

After control circuit 31 performs the process at step S35, control circuit 31 returns the subroutine of the program reselection process and brings processing back to step S2 shown in FIG. 23.

Next, the top menu reselection process at step S33 will be described.

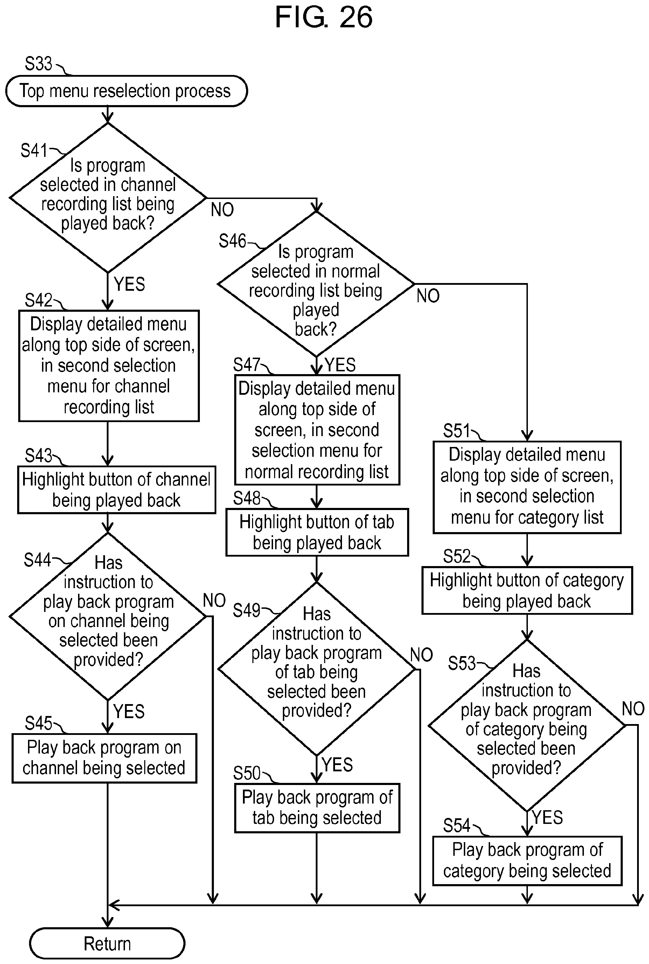

FIG. 26 is a flowchart showing an example of a subroutine of the top menu reselection process performed by control circuit 31 included in recording and playback apparatus 1 of the first exemplary embodiment.

When the top menu reselection process at step S33 starts, control circuit 31 determines whether a program selected in a channel recording list (a first program selection menu or a second program selection menu or a third program selection menu for a channel recording list) is being played back (step S41).

In case where it is determined at step S41 that a program selected in a channel recording list is being played back (YES at step S41), control circuit 31 displays detailed menu 131 along the top side of screen 40 of display 4 (see FIG. 7), in a second program selection menu for the channel recording list (step S42).

Then, control circuit 31 highlights (see FIG. 7), in displayed detailed menu 131, a button corresponding to a channel having broadcast the program being played back, for example, by cursor 132 (step S43).

Cursor 132 is movable by a user command.

Then, control circuit 31 determines whether a user command for instructing to play back a program on a channel corresponding to the button selected by cursor 132 (hereinafter, referred to as a "channel being selected") in detailed menu 131 of the second program selection menu for the channel recording list has been received (i.e., whether OK key 52 of remote controller 2 has been pressed down) (step S44).

In case where it is determined at step S44 that a user command for instructing to play back a program on a channel being selected has not been received (NO at step S44), control circuit 31 returns the subroutine of the top menu reselection process and brings processing back to step S2 shown in FIG. 23.

In case where it is determined at step S44 that a user command for instructing to play back a program on a channel being selected has been received (YES at step S44), control circuit 31 starts playback of the program on the channel being selected (step S45). Thereafter, control circuit 31 returns the subroutine of the top menu reselection process and brings processing back to step S2 shown in FIG. 23.

In case where it is determined at step S41 that a program selected in a channel recording list is not being played back (NO at step S41), control circuit 31 determines whether a program selected in a normal recording list (a first program selection menu, a second program selection menu, or a third program selection menu for a normal recording list) is being played back (step S46).

In case where it is determined at step S46 that a program selected in a normal recording list is being played back (YES at step S46), control circuit 31 displays detailed menu 231 along the top side of screen 40 of display 4 (see FIG. 12), in a second program selection menu for the normal recording list (step S47).

Then, control circuit 31 highlights (see FIG. 12), in displayed detailed menu 231, a button corresponding to a tab of the program being played back, for example, by cursor 232 (step S48).

Cursor 232 is movable by a user command.

Then, control circuit 31 determines whether a user command for instructing to play back a program of a tab corresponding to the button selected by cursor 232 (hereinafter, referred to as a "tab being selected") in detailed menu 231 of the second program selection menu for the normal recording list has been received (i.e., whether OK key 52 of remote controller 2 has been pressed down) (step S49).

In case where it is determined at step S49 that a user command for instructing to play back a program of a tab being selected has not been received (NO at step S49), control circuit 31 returns the subroutine of the top menu reselection process and brings processing back to step S2 shown in FIG. 23.

In case where it is determined at step S49 that a user command for instructing to play back a program of a tab being selected has been received (YES at step S49), control circuit 31 starts playback of the program of the tab being selected (step S50). Thereafter, control circuit 31 returns the subroutine of the top menu reselection process and brings processing back to step S2 shown in FIG. 23.

In case where it is determined at step S46 that a program selected in a normal recording list is not being played back (NO at step S46), control circuit 31 is playing back a program selected in a category list. At this time, control circuit 31 displays detailed menu 351 along the top side of screen 40 of display 4 (see FIG. 19), in a second program selection menu for the category list (step S51).

Then, control circuit 31 highlights (see FIG. 19), in displayed detailed menu 351, a button corresponding to a category of the program being played back, for example, by cursor 355 (step S52).

Cursor 355 is movable by a user command.

Then, control circuit 31 determines whether a user command for instructing to play back a program of a category corresponding to the button selected by cursor 355 (hereinafter, referred to as a "category being selected") in detailed menu 351 of the second program selection menu for the category list has been received (i.e., whether OK key 52 of remote controller 2 has been pressed down) (step S53).

In case where it is determined at step S53 that a user command for instructing to play back a program of a category being selected has not been received (NO at step S53), control circuit 31 returns the subroutine of the top menu reselection process and brings processing back to step S2 shown in FIG. 23.

In case where it is determined at step S53 that a user command for instructing to play back a program of a category being selected has been received (YES at step S53), control circuit 31 starts playback of the program of the category being selected (step S54). Thereafter, control circuit 31 returns the subroutine of the top menu reselection process and brings processing back to step S2 shown in FIG. 23.

In the top menu reselection process, when a detailed menu along the top side of screen 40 of display 4 is displayed, control circuit 31 may switch the displayed detailed menu to another detailed menu, according to a user command. That is, in the top menu reselection process, when one of detailed menu 131 for a channel recording list (see FIG. 7), detailed menu 231 for a category list (see FIG. 12), and detailed menu 351 for a normal recording list (see FIG. 19) is displayed along the top side of screen 40 of display 4, control circuit 31 may switch the displayed detailed menu to another detailed menu, according to a user command. When the displayed detailed menu is switched to another detailed menu that uses a different classification method than that of the detailed menu displayed before the switching, and the user selects and plays back a program using the detailed menu displayed after the switching, control circuit 31 stores a fact that the program that is selected using the detailed menu displayed after the switching is being played back, as with the processes at steps S15, S20, and S25 shown in FIG. 24.

Next, the left menu reselection process at step S35 will be described.

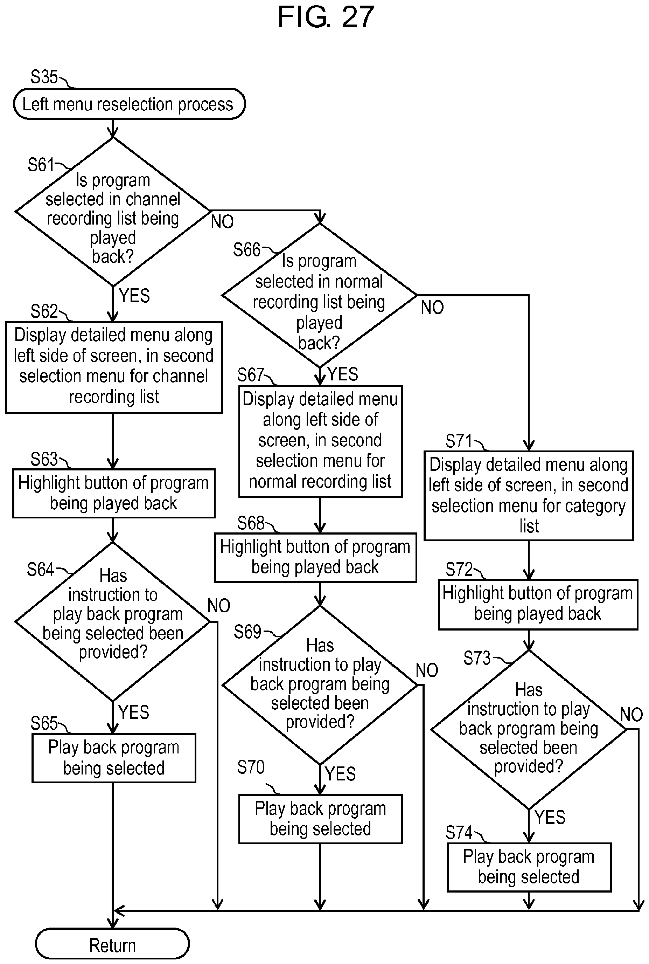

FIG. 27 is a flowchart showing an example of a subroutine of the left menu reselection process performed by control circuit 31 included in recording and playback apparatus 1 of the first exemplary embodiment.

When the left menu reselection process at step S35 starts, control circuit 31 determines whether a program selected in a channel recording list (a first program selection menu or a second program selection menu or a third program selection menu for a channel recording list) is being played back (step S61).

In case where it is determined at step S61 that a program selected in a channel recording list is being played back (YES at step S61), control circuit 31 displays detailed menu 141 along the left side of screen 40 of display 4 (see FIG. 8), in a second program selection menu for the channel recording list (step S62).

Then, control circuit 31 highlights (see FIG. 8), in displayed detailed menu 141, a button corresponding to the program being played back, for example, by cursor 142 (step S63).

Cursor 142 is movable by a user command.

Then, control circuit 31 determines whether a user command for instructing to play back a program corresponding to the button selected by cursor 142 (hereinafter, referred to as a "program being selected") in detailed menu 141 of the second program selection menu for the channel recording list has been received (i.e., whether OK key 52 of remote controller 2 has been pressed down) (step S64).

In case where it is determined at step S64 that a user command for instructing to play back a program being selected has not been received (NO at step S64), control circuit 31 returns the subroutine of the left menu reselection process and brings processing back to step S2 shown in FIG. 23.

In case where it is determined at step S64 that a user command for instructing to play back a program being selected has been received (YES at step S64), control circuit 31 starts playback of the program being selected (step S65). Thereafter, control circuit 31 returns the subroutine of the left menu reselection process and brings processing back to step S2 shown in FIG. 23.

In case where it is determined at step S61 that a program selected in a channel recording list is not being played back (NO at step S61), control circuit 31 determines whether a program selected in a normal recording list (a first program selection menu or a second program selection menu or a third program selection menu for a normal recording list) is being played back (step S66).

In case where it is determined at step S66 that a program selected in a normal recording list is being played back (YES at step S66), control circuit 31 displays detailed menu 241 along the left side of screen 40 of display 4 (see FIG. 13), in a second program selection menu for the normal recording list (step S67).

Then, control circuit 31 highlights (see FIG. 13), in displayed detailed menu 241, a button corresponding to the program being played back, for example, by cursor 242 (step S68).

Cursor 242 is movable by a user command.

Then, control circuit 31 determines whether a user command for instructing to play back a program corresponding to the button selected by cursor 242 (hereinafter, referred to as a "program being selected") in detailed menu 241 of the second program selection menu for the normal recording list has been received (i.e., whether OK key 52 of remote controller 2 has been pressed down) (step S69).

In case where it is determined at step S69 that a user command for instructing to play back a program being selected has not been received (NO at step S69), control circuit 31 returns the subroutine of the left menu reselection process and brings processing back to step S2 shown in FIG. 23.

In case where it is determined at step S69 that a user command for instructing to play back a program being selected has been received (YES at step S69), control circuit 31 starts playback of the program being selected (step S70). Thereafter, control circuit 31 returns the subroutine of the left menu reselection process and brings processing back to step S2 shown in FIG. 23.

In case where it is determined at step S66 that a program selected in a normal recording list is not being played back (NO at step S66), control circuit 31 is playing back a program selected in a category list. At this time, control circuit 31 displays detailed menu 361 along the left side of screen 40 of display 4 (see FIG. 20), in a second program selection menu for the category list (step S71).

Then, control circuit 31 highlights (see FIG. 20), in displayed detailed menu 361, a button corresponding to the program being played back, for example, by cursor 362 (step S72).

Cursor 362 is movable by a user command.

Then, control circuit 31 determines whether a user command for instructing to play back a program corresponding to the button selected by cursor 362 (hereinafter, referred to as a "program being selected") in detailed menu 361 of the second program selection menu for the category list has been received (i.e., whether OK key 52 of remote controller 2 has been pressed down) (step S73).

In case where it is determined at step S73 that a user command for instructing to play back a program being selected has not been received (NO at step S73), control circuit 31 returns the subroutine of the left menu reselection process and brings processing back to step S2 shown in FIG. 23.

In case where it is determined at step S73 that a user command for instructing to play back a program being selected has been received (YES at step S73), control circuit 31 starts playback of the program being selected (step S74). Thereafter, control circuit 31 returns the subroutine of the left menu reselection process and brings processing back to step S2 shown in FIG. 23.

Next, the program zapping process at step S5 shown in FIG. 23 will be described.

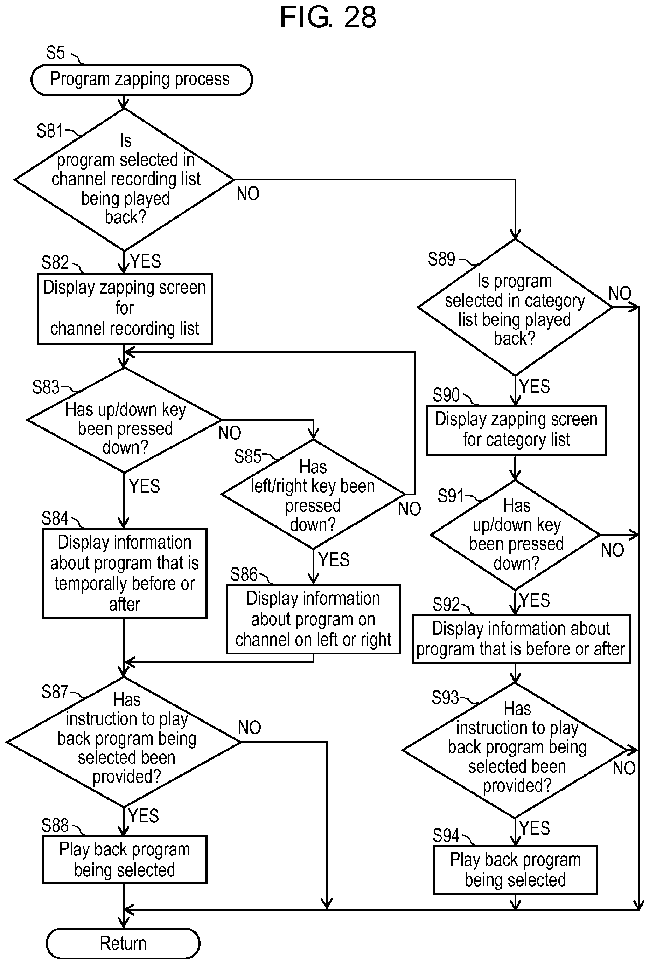

FIG. 28 is a flowchart showing an example of a subroutine of the program zapping process performed by control circuit 31 included in recording and playback apparatus 1 of the first exemplary embodiment.

When the program zapping process at step S5 starts, control circuit 31 determines whether a program selected in a channel recording list (a first program selection menu, a second program selection menu, or a third program selection menu for a channel recording list) is being played back (step S81).

If it is determined at step S81 that a program selected in a channel recording list is being played back (YES at step S81), control circuit 31 displays a third program selection menu for channel recording list (see FIG. 21) on display 4 (step S82).

Next, control circuit 31 determines whether the up key or down key of remote controller 2 has been pressed down (step S83).

In case where it is determined at step S83 that the up key or down key of remote controller 2 has been pressed down (YES at step S83), control circuit 31 displays, in the third program selection menu for the channel recording list, program information of a program that is temporally before or after the program being played back in the first program selection menu for the channel recording list (see FIG. 4) (step S84).

In case where it is determined at step S83 that either the up key or down key of remote controller 2 has not been pressed down (NO at step S83), control circuit 31 determines whether the left key or right key of remote controller 2 has been pressed down (step S85).

In case where it is determined at step S85 that either the left key or right key of remote controller 2 has not been pressed down (NO at step S85), control circuit 31 brings processing back to step S83.

In case where it is determined at step S85 that the left key or right key of remote controller 2 has been pressed down (YES at step S85), control circuit 31 displays, in the third program selection menu for the channel recording list, information about a program on a channel on a left or right of a channel having broadcast the program being played back in the first program selection menu for the channel recording list (see FIG. 4) (step S86).

Then, control circuit 31 determines whether a user command for instructing to play back a program corresponding to program information selected in the third program selection menu for the channel recording list (hereinafter, referred to as a "program being selected") has been received (i.e., whether OK key 52 of remote controller 2 has been pressed down) (step S87).

In case where it is determined at step S87 that a user command for instructing to play back a program being selected has not been received (NO at step S87), control circuit 31 returns the subroutine of the program zapping process and brings processing back to step S2 shown in FIG. 23.

In case where it is determined at step S87 that a user command for instructing to play back a program being selected has been received (YES at step S87), control circuit 31 starts playback of the program being selected (step S88). Thereafter, control circuit 31 returns the subroutine of the program zapping process and brings processing back to step S2 shown in FIG. 23.

In case where it is determined at step S81 that a program selected in a channel recording list is not being played back (NO at step S81), control circuit 31 determines whether a program selected in a category list (a first program selection menu, a second program selection menu, or a third program selection menu for a category list) is being played back (step S89).

In case where it is determined at step S89 that a program selected in a category list is not being played back (NO at step S89), control circuit 31 returns the subroutine of the program zapping process and brings processing back to step S2 shown in FIG. 23.

In case where it is determined at step S89 that a program selected in a category list is being played back (YES at step S89), control circuit 31 displays a third program selection menu for the category list (see FIG. 22) on display 4 (step S90).

Then, control circuit 31 determines whether the up key or down key of remote controller 2 has been pressed down (step S91).

In case where it is determined at step S91 that either the up key or down key of remote controller 2 has not been pressed down (NO at step S91), control circuit 31 returns the subroutine of the program zapping process and brings processing back to step S2 shown in FIG. 23.

In case where it is determined at step S91 that the up key or down key of remote controller 2 has been pressed down (YES at step S91), control circuit 31 displays, in the third program selection menu for the category list, program information of a program that is temporally before or after the program being played back in detailed menu 361 of a second program selection menu for the category list (see FIG. 20) (step S92).

Then, control circuit 31 determines whether a user command for instructing to play back a program corresponding to program information selected in the third program selection menu for the category list (hereinafter, referred to as a "program being selected") has been received (i.e., whether OK key 52 of remote controller 2 has been pressed down) (step S93).

In case where it is determined at step S93 that a user command for instructing to play back a program being selected has not been received (NO at step S93), control circuit 31 returns the subroutine of the program zapping process and brings processing back to step S2 shown in FIG. 23.

In case where it is determined at step S93 that a user command for instructing to play back a program being selected has been received (YES at step S93), control circuit 31 starts playback of the program being selected (step S94). Thereafter, control circuit 31 returns the subroutine of the program zapping process and brings processing back to step S2 shown in FIG. 23.

Next, the playback end process at step S8 shown in FIG. 23 will be described.

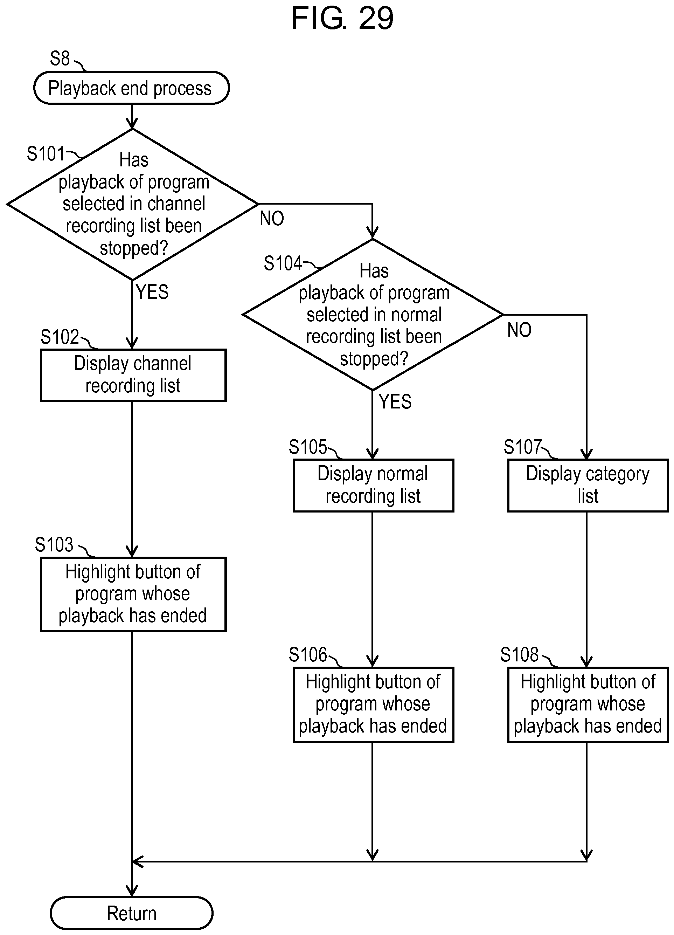

FIG. 29 is a flowchart showing an example of a subroutine of the playback end process performed by control circuit 31 included in recording and playback apparatus 1 of the first exemplary embodiment.

Control circuit 31 determines whether playback of a program selected in a channel recording list (a first program selection menu, a second program selection menu, or a third program selection menu for a channel recording list) has ended (step S101). Note that a program playback end is performed by control circuit 31 in case where it is determined at step S6 shown in FIG. 23 that a user command for instructing to stop the playback of the program has been received (YES at step S6). Alternatively, in case where it is determined at step S7 shown in FIG. 23 that the program being played back has ended (YES at step S7), control circuit 31 determines that the playback of the program has ended.

In case where it is determined at step S101 that playback of a program selected in a channel recording list has ended (YES at step S101), control circuit 31 displays a first program selection menu for the channel recording list (see FIG. 4) on display 4 (step S102).

Then, control circuit 31 highlights (see FIG. 4), in the first program selection menu for the channel recording list, a button corresponding to program information representing the program whose playback has ended, for example, by cursor 103 (step S103). Thereafter, control circuit 31 returns the subroutine of the playback end process and ends the process.

In case where it is determined at step S101 that the program whose playback has ended is not a program selected in the channel recording list (NO at step S101), control circuit 31 determines whether playback of a program selected in a normal recording list (a first program selection menu, a second program selection menu, or a third program selection menu for a normal recording list) has ended (step S104). Note that the determination at step S104 as to whether playback of a program has end is substantially the same as the determination at step S101 and thus description thereof is omitted.

In case where it is determined at step S104 that playback of a program selected in a normal recording list has ended (YES at step S104), control circuit 31 displays a first program selection menu for the normal recording list (see FIG. 9) on display 4 (step S105).

Then, control circuit 31 highlights (see FIG. 9), in the first program selection menu for the normal recording list, a button corresponding to program information representing the program whose playback has ended, for example, by cursor 204 (step S106). Thereafter, control circuit 31 returns the subroutine of the playback end process and ends the process.

In case where it is determined at step S104 that the program whose playback has ended is not a program selected in the normal recording list (NO at step S104), the program whose playback has ended is a program selected in a category list (a first program selection menu, a second program selection menu, or a third program selection menu for a category list). At this time, control circuit 31 displays a first program selection menu for the category list (see FIGS. 14 to 16) (step S107).

Then, control circuit 31 highlights (see FIG. 14), in the first program selection menu for the category list, a button corresponding to program information representing the program whose playback has ended, for example, by cursor 304 (step S108). Thereafter, control circuit 31 returns the subroutine of the playback end process and ends the process.

The above is a flowchart of the program playback process exemplified in the present exemplary embodiment.

### [1-3. Effects, etc.]

As described above, in the present exemplary embodiment, a recording and playback apparatus includes a user input unit, a receiver, a recorder, a player, a user interface creator, and a controller. The user input unit accepts a user command. The receiver receives a plurality of programs and pieces of program information of the programs. The recorder records the plurality of received programs and the pieces of received program information in a recording medium. The player plays back the recorded programs. The user interface creator creates a plurality of selection screens for selecting, by a user, a desired program from among the plurality of recorded programs. The controller controls the player and the user interface creator. Each of the selection screens created by the user interface creator arranges and displays the plurality of pieces of program information classified by different classification methods each other. When one of the pieces of program information is selected on one of the selection screens, the player plays back a program related to the selected program information. In case where the user input unit receives a predetermined user command during the playback of the program by the player, the controller controls the user interface creator such that a user interface image is created, the user interface image being for selecting any of the pieces of program information by the user and being displayed so as to be partially superimposed on video of the program being played back. The user interface image displays the pieces of program information classified by using a classification method, the classification method conforming to a classification method for the selection screen used when the program being played back is selected.

In addition, in the present exemplary embodiment, a method for displaying program information is a method for displaying program information in a recording and playback apparatus, and includes: accepting a user command; receiving a plurality of programs and pieces of program information of the programs; recording the plurality of received programs and the pieces of received program information in a recording medium; creating one of a plurality of selection screens, the selection screens being for selecting, by a user, a desired program from among the plurality of recorded programs, and arranging and displaying the plurality of pieces of program information classified by different classification methods; playing back, when one of the pieces of program information is selected on one of the selection screens, a program related to the selected program information; and creating a user interface image in case where a predetermined user command is received during the playback of the program, the user interface image being for selecting any of the pieces of program information by the user and being displayed so as to be partially superimposed on video of the program being played back. The user interface image displays the pieces of program information classified using a classification method, the classification method conforming to a classification method for the selection screen used when the program being played back is selected.

Note that recording and playback apparatus 1 is an example of the recording and playback apparatus. RC receiver 32 is an example of the user input unit. Tuners 11 to 13 and tuners 21 to 26 each are an example of the receiver. Normal recording circuit 14 and channel recording circuit 27 each are an example of the recorder. Program playback circuit 35 is an example of the player. UI creating circuit 36 is an example of the user interface creator. Control circuit 31 is an example of the controller. Storage apparatus 15 and storage apparatus 28 each are an example of the recording medium. Screen 100 of a first program selection menu for a channel recording list shown in FIG. 4, screen 200 of a first program selection menu for a normal recording list shown in FIG. 9, and screens 300, 310, 320 of a first program selection menu for a category list shown in FIGS. 14 to 16 are examples of the plurality of selection screens. Pressing down of the left key of remote controller 2 is an example of the predetermined user command. Screen 140 of a second program selection menu for a channel recording list shown in FIG. 8, screen 240 of a second program selection menu for a normal recording list shown in FIG. 13, and screen 360 of a second program selection menu for a category list shown in FIG. 20 each are an example of the user interface image.

For example, in an example shown in the first exemplary embodiment, recording and playback apparatus 1 includes RC receiver 32; tuners 11 to 13 and tuners 21 to 26; normal recording circuit 14 and channel recording circuit 27; program playback circuit 35; UI creating circuit 36; and control circuit 31. RC receiver 32 accepts a user command which is transmitted from remote controller 2. Tuners 11 to 13 and tuners 21 to 26 receive a plurality of programs and pieces of program information of the programs. Normal recording circuit 14 records the plurality of received programs and the pieces of received program information in storage apparatus 15. Channel recording circuit 27 records the plurality of received programs and the pieces of received program information in storage apparatus 28. Program playback circuit 35 plays back the recorded programs. UI creating circuit 36 creates a plurality of selection screens for selecting, by a user, a desired program from among the plurality of recorded programs (e.g., screen 100 of a first program selection menu for a channel recording list shown in FIG. 4, screen 200 of a first program selection menu for a normal recording list shown in FIG. 9, and screens 300, 310, 320 of a first program selection menu for a category list shown in FIGS. 14 to 16). Control circuit 31 controls program playback circuit 35 and UI creating circuit 36. Each of the selection screens created by UI creating circuit 36 arranges and displays the plurality of pieces of program information classified by different classification methods each other. When one of the pieces of program information is selected on one of the selection screens, program playback circuit 35 plays back a program related to the selected program information. In case where RC receiver 32 receives a predetermined user command (e.g., a user command created by pressing down the left key of remote controller 2) during the playback of the program by program playback circuit 35, control circuit 31 controls UI creating circuit 36 such that a user interface image (e.g., screen 140 of a second program selection menu for a channel recording list shown in FIG. 8, screen 240 of a second program selection menu for a normal recording list shown in FIG. 13, or screen 360 of a second program selection menu for a category list shown in FIG. 20) is created, the user interface image being for selecting any of the pieces of program information by the user and being displayed so as to be partially superimposed on video of the program being played back. The user interface image displays the pieces of program information classified using a classification method, the classification method conforming to a classification method for the selection screen used when the program being played back is selected.

The user interface image may display a region representing a classification type of the classification method for the selection screen used when the program being played back is selected.

Note that pressing down of the up key of remote controller 2 is an example of the predetermined user command. Screen 130 of a second program selection menu for a channel recording list shown in FIG. 7, screen 230 of a second program selection menu for a normal recording list shown in FIG. 12, and screen 350 of a second program selection menu for a category list shown in FIG. 19 each are an example of the user interface image.

For example, in an example shown in the first exemplary embodiment, in recording and playback apparatus 1, in the case where RC receiver 32 receives a predetermined user command (e.g., a user command created by pressing down the up key of remote controller 2) during playback of a program by program playback circuit 35, control circuit 31 controls UI creating circuit 36 such that a user interface image (e.g., screen 130 of a second program selection menu for a channel recording list shown in FIG. 7, screen 230 of a second program selection menu for a normal recording list shown in FIG. 12, or screen 350 of a second program selection menu for a category list shown in FIG. 19) is created, the user interface image being for selecting program information by the user and being displayed so as to be partially superimposed on video of the program being played back. The user interface image displays a region representing a classification type of a classification method for a selection screen used when the program being played back is selected.

In the recording and playback apparatus, the controller may highlight a region of a classification type to which the program being played back by the player belongs.

For example, in an example shown in the first exemplary embodiment, in recording and playback apparatus 1, control circuit 31 highlights a region of a classification type to which a program being played back by program playback circuit 35 belongs.

The region representing a classification type in the user interface image may be displayed by an icon or a tag.

In the recording and playback apparatus of the present exemplary embodiment, the controller may control the user interface creator such that, when the playback of the program selected from the one of the selection screens and played back is stopped, the one of the selection screens is displayed.

For example, in an example shown in the first exemplary embodiment, in recording and playback apparatus 1, control circuit 31 controls UI creating circuit 36 such that, when playback of a program selected from one selection screen and played back is stopped, the one selection screen is displayed.

In the recording and playback apparatus of the present exemplary embodiment, the recorder may have a first recording function of recording individual programs specified by the user; and a second recording function of continuously recording a plurality of programs that are broadcast on a predetermined channel group. The selection screens may include a first selection screen for selecting, by the user, a desired program from among the plurality of programs recorded using the first recording function; and a second selection screen for selecting, by the user, a desired program from among the plurality of programs recorded using the second recording function.

Note that the normal recording function is an example of the first recording function. The channel recording function is an example of the second recording function. The predetermined channel group is a plurality of channels set in advance by the user, etc., and channels CH1 to CH6 shown in FIG. 4 are an example of the predetermined channel group. The normal recording list is an example of the first selection screen. The channel recording list is an example of the second selection screen.

For example, in an example shown in the first exemplary embodiment, in recording and playback apparatus 1, normal recording circuit 14 has the normal recording function of recording individual programs specified by the user, and channel recording circuit 27 has the channel recording function of continuously recording a plurality of programs that are broadcast on a predetermined channel group (e.g., channels CH1 to CH6). Selection screens include: a normal recording list for selecting, by the user, a desired program from among the plurality of programs recorded using the normal recording function; and a channel recording list for selecting, by the user, a desired program from among the plurality of programs recorded using the channel recording function.

In an example shown in the first exemplary embodiment, recording and playback apparatus 1 is disclosed that records and plays back a plurality of programs having been broadcast. Recording and playback apparatus 1 includes storage apparatuses 15, 28, at least one tuner 11 to 13, 21 to 26, normal recording circuit 14, channel recording circuit 27, program playback circuit 35, UI creating circuit 36, screen superimposing circuit 37, RC receiver 32, and control circuit 31.

At least one tuner 11 to 13, 21 to 26 receives a plurality of programs having been broadcast and pieces of program information of the programs. Normal recording circuit 14 records a plurality of programs and pieces of program information of the programs which are received by at least one of tuners 11 to 13, in storage apparatus 15. Channel recording circuit 27 records a plurality of programs and pieces of program information of the programs which are received by at least one of tuners 21 to 26, in storage apparatus 28. Program playback circuit 35 plays back one of the plurality of programs recorded in storage apparatuses 15, 28.

UI creating circuit 36 creates a plurality of user interface images (UI images) for enabling the user to select one of the plurality of programs recorded in storage apparatuses 15, 28. Screen superimposing circuit 37 generates an output video signal, based on a video signal of a played-back program and a UI image.

RC receiver 32 obtains user commands from remote controller 2. Control circuit 31 controls normal recording circuit 14, channel recording circuit 27, program playback circuit 35, and UI creating circuit 36, based on the user commands.

UI creating circuit 36 creates UI images of program selection menus with a plurality of pairs where the pieces of program information of the plurality of programs recorded in storage apparatuses 15, 28 are classified and arranged by a plurality of classification methods. Each program selection menu has a first program selection menu and a second program selection menu. The first program selection menu and the second program selection menu include a plurality of arrays of a plurality of pieces of program information classified by a same classification method. In recording and playback apparatus 1, when a recorded program is not being played back the first program selection menu is displayed, and when a recorded program is being played back the second program selection menu is displayed so as to be partially superimposed on video of the program being played back.

When a user command for instructing to call a second program selection menu is input in a state in which a recorded program is being played back, control circuit 31 displays a second program selection menu such that the second program selection menu is partially superimposed on video of the program being played back, the second program selection menu using a classification method that conforms to a classification method for a program selection menu used when the program being played back is selected.

In recording and playback apparatus 1 of the present exemplary embodiment, the second program selection menu includes a plurality of tab menus and a plurality of detailed menus corresponding to the respective tab menus. When a user command for instructing to call a second program selection menu is input, control circuit 31 allows a plurality of tab menus to be displayed. When a user command for selecting one of the plurality of tab menus is input, control circuit 31 allows a detailed menu corresponding to the selected one tab menu to be displayed. In recording and playback apparatus 1, when a user command for selecting a first tab menu among the plurality of tab menus is input, a first detailed menu among a plurality of detailed menus corresponding to the first tab menu includes a plurality of icons representing a plurality of arrays. In recording and playback apparatus 1, when a user command for selecting a second tab menu among the plurality of tab menus is input, a second detailed menu among a plurality of detailed menus corresponding to the second tab menu includes an array to which a program being played back belongs.

In recording and playback apparatus 1 of the present exemplary embodiment, when a user command for selecting the first tab menu is input, control circuit 31 allows, in the first detailed menu, an icon of an array to which the program being played back belongs to be highlighted. When a user command for selecting the second tab menu is input, control circuit 31 allows, in the second detailed menu, the program being played back to be highlighted.

In recording and playback apparatus 1 of the present exemplary embodiment, when, in a state in which a second program selection menu is being displayed, a user command for instructing to display another second program selection menu that uses a different classification method than the second program selection menu being displayed is input, control circuit 31 allows another second program selection menu to be displayed.

In recording and playback apparatus 1 of the present exemplary embodiment, when playback of a recorded program has ended, control circuit 31 allows a first program selection menu to be displayed, the first program selection menu using a same classification method as a classification method for a program selection menu used when the program whose playback has ended is selected.

In recording and playback apparatus 1 of the present exemplary embodiment, control circuit 31 allows, in the first program selection menu, the program whose playback has ended to be highlighted.

In recording and playback apparatus 1 of the present exemplary embodiment, UI creating circuit 36 further creates a UI image of a third program selection menu which is displayed when a recorded program is being played back. In recording and playback apparatus 1, the third program selection menu includes at least one piece of program information adjacent to program information of the program being played back in a plurality of arrays of a plurality of programs that are classified by at least one of a plurality of classification methods. When a user command for instructing to call a third program selection menu is input in a state in which a recorded program is being played back, control circuit 31 allows a third program selection menu to be displayed, the third program selection menu using a same classification method as a classification method for a program selection menu used when the program being played back is selected.

In recording and playback apparatus 1 of the present exemplary embodiment, tuners 21 to 26 receive a plurality of programs that are broadcast on a plurality of channels and pieces of program information of the programs, and in one of a plurality of classification methods the plurality of pieces of program information are classified into a plurality of arrays corresponding to the plurality of channels, respectively.

In recording and playback apparatus 1 of the present exemplary embodiment, in one of the plurality of classification methods, the plurality of programs are classified into a plurality of arrays corresponding to a plurality of categories, respectively.

In recording and playback apparatus 1 of the present exemplary embodiment, normal recording circuit 14 records, in storage apparatus 15, a plurality of programs selected by the user as a plurality of first programs, and channel recording circuit 27 records, in storage apparatus 28, a plurality of programs that are broadcast on at least one predetermined channel as a plurality of second programs. In recording and playback apparatus 1, the plurality of recorded first programs are classified into a plurality of arrays by a first classification method among a plurality of classification methods, and the plurality of recorded second programs are classified into a plurality of arrays by a second classification method among the plurality of classification methods.

By this, in recording and playback apparatus 1 of the present exemplary embodiment, the user can select and play back a desired program from among a plurality of recorded programs, with a relatively small amount of time and trouble. In addition, in recording and playback apparatus 1 of the present exemplary embodiment, when a recorded program is being played back, a second program selection menu is displayed. By this, it becomes unnecessary to stop the playback of the program to display a first program selection menu. Hence, the user can select and play back another program, with a relatively small amount of time and trouble.

Recording and playback apparatus 1 of the present exemplary embodiment, for example, uses a normal recording list having a format where a plurality of programs are arranged chronologically, in order for the user to select any of programs recorded by normal recorder 10. In addition, recording and playback apparatus 1 uses a channel recording list having a program table format where a plurality of programs are arranged two-dimensionally by channel and time, and a category list having a format where a plurality of programs are classified and arranged by category, in order for the user to select any of programs recorded by channel recorder 20.

In recording and playback apparatus 1 of the present exemplary embodiment, control circuit 31 allows, for each of the channel recording list, the normal recording list, and the category list, a first program selection menu and a second program selection menu to be displayed such that the first program selection menu and the second program selection menu are associated with each other.

In recording and playback apparatus 1 of the present exemplary embodiment, control circuit 31 controls, for each of the channel recording list, the normal recording list, and the category list, content, a page of a program selection menu to be displayed, and a position to be highlighted of the first program selection menu and the second program selection menu.

In recording and playback apparatus 1 of the present exemplary embodiment, for example, when a user command for instructing to call a second program selection menu is input in a state in which a program selected using a first program selection menu for a channel recording list is being played back, a second program selection menu for the channel recording list is displayed. In addition, in recording and playback apparatus 1, when a program selected using the second program selection menu for the channel recording list is played back and the playback of the program is stopped, the first program selection menu for the channel recording list is displayed. In addition, in recording and playback apparatus 1, when cursor key 51 of remote controller 2 is pressed down in a state in which a program selected using a program selection menu for the channel recording list is being played back, a third program selection menu for the channel recording list is displayed, the third program selection menu including program information adjacent to program information of the program being played back in a plurality of arrays in the channel recording list.

In recording and playback apparatus 1, when the third program selection menu for the channel recording list is displayed, the user can select program information of a program that is temporally before or after the program being played back, by pressing down the up key or down key of cursor key 51, and select a channel adjacent, on a left or right, to a channel of the program being played back, by pressing down the left key or right key of cursor key 51.

In recording and playback apparatus 1, when cursor key 51 of remote controller 2 is pressed down in a state in which a program selected using a program selection menu for a category list is being played back, a third program selection menu for the category list is displayed, the third program selection menu including program information adjacent to program information of the program being played back in a plurality of arrays in the category list. In recording and playback apparatus 1, when the third program selection menu for the category list is displayed, the user can select program information that is before or after program information of the program being played back, by pressing down the up key or down key of cursor key 51.

### (OTHER EXEMPLARY EMBODIMENTS)

As described above, the first exemplary embodiment is described as exemplification of a technique disclosed in the present application. However, the technique in the present disclosure is not limited thereto and can also be applied to an exemplary embodiment where changes, substitutions, additions, omissions, etc., are made. In addition, it is also possible to make a new exemplary embodiment by combining the components described in the above-described first exemplary embodiment.

Hence, other exemplary embodiments will be exemplified below.

Although, in the first exemplary embodiment, normal recording circuit 14, channel recording circuit 27, control circuit 31, program DB creating circuit 34, program playback circuit 35, UI creating circuit 36, and screen superimposing circuit 37 are shown as different blocks, some or all of these blocks may be configured as a single block. In addition, these blocks may be implemented by hardware, or may be implemented by software that is executed on a processor.

In the first exemplary embodiment, arrays of program information, arrays of channels, and the like, which are shown in the drawings as examples of a program selection menu are merely examples. Program information, channels, and the like, which are displayed in a program selection menu may be appropriately set according to reception conditions of broadcast signals, broadcast programs, etc.

As described above, the exemplary embodiments are described as exemplification of the technique in the present disclosure. To do so, the accompanying drawings and detailed description are provided.

Therefore, the components described in the accompanying drawings and detailed description not only include components essential to solve the problem, but may also include, in order to exemplify the above-described technique, components that are not essential to solve the problem. Hence, it should not be acknowledged such that describing those non-essential components in the accompanying drawings or detailed description directly means that those non-essential components are essential.

In addition, the above-described exemplary embodiments are provided to exemplify the technique in the present disclosure, and thus, various changes, substitutions, additions, omissions, etc., can be made within the range of the claims or the range of equivalency of the claims.

### INDUSTRIAL APPLICABILITY

The present disclosure is applicable to a recording and playback apparatus including a large-capacity storage apparatus. Specifically, the present disclosure is applicable to a recording and playback apparatus such as a video recorder, a video receiving apparatus such as a television receiver having a recording and playback function, etc.

### REFERENCE MARKS IN THE DRAWINGS

1: recording and playback apparatus
2: remote controller
3: program information server apparatus
4: display
10: normal recorder
11, 12, 13: tuner
14: normal recording circuit
15: storage apparatus
20: channel recorder
21, 22, 23, 24, 25, 26: tuner
27: channel recording circuit
28: storage apparatus
31: control circuit
32: RC receiver
33: communication circuit
34: program DB creating circuit
35: program playback circuit
36: UI creating circuit
37: screen superimposing circuit
40: screen
51: cursor key
52: OK key
53: channel recording list key
54: normal recording list key
55: category list key
56: playback menu key
57: motion key
58: stop key
100, 110, 120, 130, 140, 200, 210, 220, 230, 240, 300, 310, 320, 330, 340, 350, 360, 400, 410: screen
101: program table area
102: description area
103, 132, 142, 202, 204, 232, 242, 304, 355, 362, 406, 414: cursor
121, 122, 123, 124, 221, 222, 223, 224, 341, 342, 343, 344: tab menu
131, 141, 231, 241, 351, 361: detailed menu
133, 233, 305, 311, 312, 321, 356, 357, 401, 402, 403, 404, 405, 411, 412, 413: button
201: tag
203: program list
301: history area
302: ranking area
303: news area
352: information area
353: genre area
354: favorite area
ANT: antenna

## Claims

1. A recording and playback apparatus comprising:
a user input unit that accepts a user command;
a receiver that receives a plurality of programs and pieces of program information of the programs;
a recorder that records the plurality of received programs and the pieces of received program information in a recording medium;
a player that plays back the recorded programs;
a user interface creator that creates a plurality of selection screens for selecting, by a user, a desired program from among the plurality of recorded programs; and
a controller that controls the player and the user interface creator,
wherein each of the selection screens created by the user interface creator arranges and displays the plurality of pieces of program information classified by different classification methods each other,
wherein when one of the pieces of program information is selected on one of the selection screens, the player plays back the program related to the selected program information,
wherein when the user input unit receives a predetermined user command during the playback of the program by the player, the controller controls the user interface creator such that a user interface image is created, the user interface image being for selecting any of the pieces of program information by the user and being displayed so as to be partially superimposed on video of the program being played back, and
wherein the user interface image displays the pieces of program information classified using a classification method, the classification method conforming to a classification method for the selection screen used when the program being played back is selected.

2. The recording and playback apparatus according to claim 1,
wherein the controller controls the user interface creator such that, when the playback of the program selected from one of the selection screens and played back is stopped, the one of the selection screens is displayed.

3. The recording and playback apparatus according to claim 1,
wherein the recorder has: a first recording function of recording individual programs specified by the user; and a second recording function of continuously recording the plurality of programs that are broadcast on a predetermined channel group, and
wherein the selection screens include: a first selection screen for selecting, by the user, a desired program from among the plurality of programs recorded using the first recording function; and a second selection screen for selecting, by the user, a desired program from among the plurality of programs recorded using the second recording function.

4. A recording and playback apparatus comprising:
a user input unit that accepts a user command;
a receiver that receives a plurality of programs and pieces of program information of the programs;
a recorder that records the plurality of received programs and the pieces of received program information in a recording medium;
a player that plays back the recorded programs;
a user interface creator that creates a plurality of selection screens for selecting, by a user, a desired program from among the plurality of recorded programs; and
a controller that controls the player and the user interface creator,
wherein each of the selection screens created by the user interface creator arranges and displays the plurality of pieces of program information classified by different classification methods each other,
wherein when one of the pieces of program information is selected on one of the selection screens, the player plays back the program related to the selected program information,
wherein when the user input unit receives a predetermined user command during the playback of the program by the player, the controller controls the user interface creator such that a user interface image is created, the user interface image being for selecting any of the pieces of program information by the user and being displayed so as to be partially superimposed on video of the program being played back, and
wherein the user interface image displays a region representing a classification type of a classification method for the selection screen used when the program being played back is selected.

5. The recording and playback apparatus according to claim 4,
wherein the controller highlights a region of a classification type to which the program being played back by the player belongs.

6. The recording and playback apparatus according to claim 4,
wherein a region representing a classification type in the user interface image is displayed by an icon or a tag.

7. A method for displaying program information in a recording and playback apparatus, the method comprising:
accepting a user command;
receiving a plurality of programs and pieces of program information of the programs;
recording the plurality of received programs and the pieces of received program information in a recording medium;
creating one of a plurality of selection screens, the selection screens being for selecting, by a user, a desired program from among the plurality of recorded programs, and arranging and displaying the plurality of pieces of program information classified by different classification methods each other;
playing back, when one of the pieces of program information is selected on one of the selection screens, the program related to the selected program information; and
creating a user interface image when a predetermined user command is received during the playback of the program, the user interface image being for selecting any of the pieces of program information by the user and being displayed so as to be partially superimposed on video of the program being played back,
wherein the user interface image displays the pieces of program information classified using a classification method, the classification method conforming to a classification method for the selection screen used when the program being played back is selected.

8. A method for displaying program information in a recording and playback apparatus, the method comprising:
accepting a user command;
receiving a plurality of programs and pieces of program information of the programs;
recording the plurality of received programs and the pieces of received program information in a recording medium;
creating one of a plurality of selection screens, the selection screens being for selecting, by a user, a desired program from among the plurality of recorded programs, and arranging and displaying the plurality of pieces of program information classified by different classification methods each other;
playing back, when one of the pieces of program information is selected on one of the selection screens, the program related to the selected program information; and
creating a user interface image when a predetermined user command is received during the playback of the program, the user interface image being for selecting any of the pieces of program information by the user and being displayed so as to be partially superimposed on video of the program being played back,
wherein the user interface image displays a region representing a classification type of a classification method for the selection screen used when the program being played back is selected.
